# EUROPEAN PATENT APPLICATION

(11) **EP 4 642 036 A1**
(43) Date of publication of application: **29.10.2025**
(21) Application number: 23920851.5
(22) Date of filing: 01.12.2023
(51) Int. Cl.: H04N 23/51, H04N 23/56

(54) **ELECTRONIC DEVICE**

(30) Priority: 06.02.2023 CN 202310150285
(71) Applicant: Honor Device Co., Ltd., Shenzhen, Guangdong 518040 (CN)
(72) Inventor: LIU, Jinhua, Shenzhen, Guangdong 518040 (CN); TANG, Feng, Shenzhen, Guangdong 518040 (CN)
(74) Representative: Isarpatent
(86) International application number: PCT/CN2023/135900
(87) International publication number: WO 2024/164662

(57) **Abstract**

This application provides an electronic device, and relates to the technical field of electronics. In the electronic device according to this application, multiple flash modules are provided, and the multiple flash modules are spaced apart. In this way, the multiple flash modules can operate at the same time to improve the light supplementing effect, thus improving the photographing quality of the electronic device in a relatively dark environment, and improving the user experience.

## Description

This application claims priority to Chinese Patent Application No. 202310150285.6, filed with the China National Intellectual Property Administration on February 6, 2023, and entitled "ELECTRONIC DEVICE", which is incorporated herein by reference in its entirety.

### TECHNICAL FIELD

This application relates to the technical field of electronics, and in particular, to an electronic device.

### BACKGROUND

Camera modules are widely used in electronic devices such as cellphones, laptops, and tablets to meet the photographing needs of the electronic devices. With the development of electronic device technology, users have increasingly high requirements on the photographing quality of the electronic devices. The photographing quality of the electronic devices in the related arts is poor, so how to further optimize the photographing quality of the electronic devices remains an important research direction for various manufacturers.

### SUMMARY

An embodiment of this application provides an electronic device. The electronic device includes multiple flash modules, which are beneficial for improving the light supplementing effect during photographing, thus improving the photographing quality of the electronic device in scenarios having light supplementing demands.

To achieve the foregoing objective, the embodiment of this application adopts the following technical solution:

The electronic device according to the embodiment of this application includes a back cover, a decoration part, a camera module, and multiple flash modules. The back cover is provided with a mounting opening. The decoration part is mounted at the mounting opening. The decoration part is provided with a light hole and an accommodating cavity. The light hole is spaced apart from the accommodating cavity. The light hole is opposite to the mounting opening. The decoration part further includes a transparent portion. The transparent portion is located at an outer end of the accommodating cavity and defines an outer end wall surface of the accommodating cavity. The camera module is located on an inner side of the back cover. A light input end of the camera module is located in the light hole. The multiple flash modules are spaced apart in the accommodating cavity. Each flash module outputs light towards a side where the transparent portion is located.

In the electronic device according to the embodiment of this application, multiple flash modules are provided, and the multiple flash modules are spaced apart. In this way, the multiple flash modules can operate at the same time to improve the light supplementing effect, thus improving the photographing quality of the electronic device in a relatively dark environment, and improving the user experience. On this basis, an accommodating cavity for accommodating the multiple flash modules is formed in the decoration part, the decoration part is provided with a transparent portion, and the transparent portion defines a wall surface of one end of the accommodating cavity away from the inside of the electronic device, so that the flash modules can be located on the side towards which the inner surface of the transparent portion faces, that is, the flash modules can be hidden on the inner side of the transparent portion. Therefore, without providing a flash hole running through the decoration part in the decoration part, the flash modules can project light to the outer side of the electronic device, thus achieving the purpose of supplementing light to the camera module, further helping to improve the structural strength of the decoration part, and protecting and hiding the flash modules by using the transparent portion.

In some embodiments of this application, the decoration part includes a first portion and a second portion. The first portion is connected to and surrounds the second portion, or the second portion is connected to and surrounds the first portion. The first portion is formed with the accommodating cavity and includes the transparent portion. The multiple flash modules are spaced apart in a circumferential direction of the decoration part. The second portion is provided with the light hole. In this way, the light supplementing effect of the multiple camera modules can be improved, thus meeting the photographing needs at some dark nights and improving the photographing quality of the electronic device.

In some embodiments of this application, the accommodating cavity is in an annular shape extending along the circumferential direction of the decoration part, that is to say, the accommodating cavity annularly extends along the circumferential direction of the decoration part, and the transparent portion is in an annular shape extending along the circumferential direction of the decoration part, that is to say, the transparent portion annularly extends along the circumferential direction of the decoration part. In this way, when the flash modules operate, the light projected by the flash modules can be projected onto the annular transparent portion, thus making the entire transparent portion present a luminous effect, forming an annular light strip effect, and not only helping to further improve the light supplementing effect and improve the photographing quality of the electronic device, but also helping to make the electronic device more recognizable and competitive and improve the user experience.

In some embodiments of this application, the multiple flash modules are uniformly spaced apart in the circumferential direction of the decoration part. In this way, it helps to improve the uniformity of light at the transparent portion, thus improving the light supplementing effect and light supplementing uniformity of the flash modules to the camera module.

In some embodiments of this application, multiple light holes and multiple camera modules are respectively provided, the multiple light holes correspond to the multiple camera modules one to one, orthographic projections of centerlines of the multiple light holes in a plane parallel to the second portion are located on the same reference circle, and an orthographic projection of a centerline of the transparent portion in the plane parallel to the second portion is overlapped with a circle center of the reference circle. In this way, on the one hand, it helps to optimize the relative position relationship between the transparent portion and the multiple light holes, and improve the light supplementing effect. On the other hand, the entire structure is more symmetrical, thus making it easier to manufacture and further improving the appearance attractiveness of the electronic device.

In some embodiments of this application, multiple light holes and multiple camera modules are respectively provided, the multiple light holes correspond to the multiple camera modules one to one, and the multiple light holes are uniformly spaced apart in the circumferential direction of the decoration part. Therefore, the light supplementing effect and light supplementing uniformity of the flash modules to the camera modules are further improved.

In some embodiments of this application, one light hole is provided, and a centerline of the light hole is collinear with a centerline of the transparent portion. In this way, on the one hand, it helps to optimize the relative position relationship between the transparent portion and the multiple light holes, and improve the light supplementing effect. On the other hand, the entire structure is more symmetrical, thus making it easier to manufacture and further improving the appearance attractiveness of the electronic device.

In some embodiments of this application, an inner end of the accommodating cavity is provided with a wiring opening communicated with the accommodating cavity, the electronic device further includes multiple electrical connection structures, the multiple electrical connection structures correspond to the multiple flash modules one to one, one end of each electrical connection structure is fixed and electrically connected to the corresponding flash module through the wiring opening, and the other end of each electrical connection structure extends to a side towards which an inner surface of the back cover faces. In this way, on the one hand, the arrangement of the wiring opening can facilitate the wiring between the electrical connection structures and the flash modules, thus facilitating the introduction of electricity into the flash modules; and on the other hand, the multiple flash modules correspond to the multiple electrical connection structures one to one and are electrically connected thereto, thus achieving the independent wiring of the multiple different flash modules, not affecting the operation of other electrical connection structures in a case that one electrical connection structure is damaged due to squeezing, and ensuring the normal operation of the flash modules corresponding to other electrical connection structures.

In some embodiments of this application, the first portion surrounds an outer periphery of the second portion, the first portion further includes a first connection plate and a second connection plate, the first connection plate and the second connection plate are both annularly cylindrical, the first connection plate is connected to an outer peripheral edge of the second portion, the second connection plate surrounds an outer periphery of the first connection plate and is spaced apart from the first connection plate, the transparent portion is connected between an outer end of the first connection plate and an outer end of the second connection plate to define the accommodating cavity with the first connection plate and the second connection plate, and the inner end of the accommodating cavity is open to form the annular wiring opening. In this way, the structure is simple, and the processing and manufacturing are facilitated.

In some embodiments of this application, the first portion and the second portion are an integrally molded part. In this way, the manufacturing process of the decoration part can be simplified, the manufacturing cost can be reduced, and the structural strength of the decoration part can be improved.

In some embodiments of this application, the first portion surrounds an outer periphery of the second portion, the first portion includes a third connection plate and a lampshade, the third connection plate is annular sheet-like and connected to an outer peripheral edge of the second portion, the lampshade covers an outer surface of the third connection plate and defines the accommodating cavity with the third connection plate, the third connection plate is provided with the wiring opening, an end wall plate of the lampshade away from the third connection plate defines the transparent portion, and the lampshade and the third connection plate are not an integrally molded part. Usually, in order to transmit light, the material of the transparent portion needs to be a transparent material, the transparent material is generally a material such as plastic or glass, and the structural strength of such material is low. However, in this application, the lampshade and the third connection plate are not an integrally molded part, that is to say, the lampshade and the third connection plate are processed separately and then assembled and connected. In this way, it helps to select different materials to manufacture the lampshade and the third connection plate separately, thus facilitating the selection of materials with higher structural strength to process the third connection plate, and thus improving the structural strength of the decoration part.

In some embodiments of this application, multiple wiring openings are provided, the multiple wiring openings are spaced apart in the circumferential direction of the decoration part, one flash module corresponds to one wiring opening, and a portion of each flash module is accommodated and fixed in the corresponding wiring opening. In this way, on the one hand, it can help to reduce the height occupied by the flash module in the accommodating cavity, thus helping to reduce the height of the decoration part and reduce the height of the electronic device.

In some embodiments of this application, in order to simplify the manufacturing process, reduce the production cost, and simultaneously improve the reliability of the connection between the second portion and the third connection plate, the third connection plate and the second portion are an integrally molded part.

In some embodiments of this application, the lampshade is a plastic part, and the third connection plate and the second portion are a metal part as a whole. In this way, it helps to improve the structural strength of the decoration part.

In some embodiments of this application, the decoration part is located on a side towards which an outer surface of the back cover faces, and is fixed to a portion of the outer surface of the back cover that surrounds the mounting opening. Specifically, for the assembled electronic device, the relative position relationship between the camera module and the mounting opening is fixed. In a case that the decoration part is located on the side towards which the outer surface of the back cover faces as a whole, the decoration part will be relatively far away from the inside of the electronic device. For some camera modules with a relatively large height in the thickness direction of the electronic device, interference between the decoration part and the camera module can be avoided, and the situation of the decoration part squeezing the light input end of the camera module can be avoided, thus meeting the assembling height requirement of the camera module, simplifying the mounting of the decoration part, and facilitating the assembling.

In some embodiments of this application, the decoration part includes a first portion, the first portion is fixed onto the portion of the outer surface of the back cover that surrounds the mounting opening, the first portion is formed with the accommodating cavity, the inner end of the accommodating cavity is provided with a wiring opening communicated with the accommodating cavity, a portion of the back cover opposite to the wiring opening is provided with multiple wiring avoidance openings, and the multiple wiring avoidance openings are spaced apart in the circumferential direction of the decoration part; and the electronic device further includes multiple electrical connection structures, one flash module corresponds to one electrical connection structure and one wiring avoidance opening, one end of each electrical connection structure is fixed and electrically connected to the corresponding flash module through the wiring opening, and each electrical connection structure penetrates through the corresponding wiring avoidance opening and extends to the side towards which an inner surface of the back cover faces. In this way, on the one hand, in the mounting process, after the decoration part and the back cover are mounted in place, the flash module can be mounted in the accommodating cavity sequentially through the wiring avoidance opening and the wiring opening. On the other hand, it can also help the end of the electrical connection structure electrically connected to each flash module to pass through the wiring avoidance opening corresponding to the flash module and then be electrically connected to the corresponding flash module, thus making the electrical connection structures of the multiple flash modules spaced apart, so as to ensure that the multiple electrical connection structures are independent of each other and prevent the problem of short circuiting in a case that the multiple electrical connection structures are connected together.

In some embodiments of this application, the outer surface of the back cover is recessed in a direction towards the inner surface of the back cover to form a first positioning groove, the first positioning groove is arranged around the mounting opening, the first positioning groove extends to the mounting opening in a direction towards the mounting opening, an inner end of the first portion is fixed in the first positioning groove, and the wiring avoidance opening is located at the first positioning groove. In this way, it helps to reduce the height of the decoration part protruding from the outer surface of the back cover, thus reducing the overall thickness of the electronic device.

In some embodiments of this application, the decoration part is arranged in the mounting opening in a penetrating manner. In this way, it helps to reduce the height of the decoration part protruding from the outer surface of the electronic device, thus reducing the overall thickness of the electronic device and helping to achieve the thin design of the electronic device. In addition, in a case that the decoration part is provided with a wiring opening, the wiring opening in the decoration part may be located in the electronic device, thus on one hand, helping to implement the wiring and shorten the wiring path, and on the other hand, compared with the method of fixing the decoration part on the outer surface of the back cover and opening a wiring avoidance opening corresponding to the wiring opening in the back cover, avoiding the arrangement of the wiring avoidance opening in the back cover, and helping to improve the structural strength of the back cover.

In some embodiments of this application, an inner end of an outer peripheral surface of the decoration part is provided with a fixing flange, the fixing flange is arranged around the decoration part, and the fixing flange is fixed onto the inner surface of the back cover. In this way, on the one hand, it helps to improve the reliability of the connection between the decoration part and the back cover; and on the other hand, the arrangement of the fixing flange can also play a role of sealing a gap between the outer surface of the decoration part and the inner surface of the mounting opening, thus improving the waterproof and dust-proof effect.

In some embodiments of this application, the inner surface of the back cover is recessed in a direction towards an outer surface of the back cover to form a second positioning groove, the second positioning groove is arranged around the mounting opening, the second positioning groove extends to the mounting opening in a direction towards the mounting opening, and the fixing flange is fixed in the second positioning groove. In this way, on the one hand, the fitting between the second positioning groove and the fixing flange can achieve the positioning and mounting of the decoration part and improve the assembling efficiency; and on the other hand, it also helps to avoid the problem that the fixing flange protrudes from the inner surface of the back cover and occupies the internal space of the back housing due to the absence of the second positioning groove, thus helping to optimize the structural layout of the electronic device. In addition, for the assembled electronic device, the relative position relationship between the camera module and the mounting opening is fixed. In a case that the second positioning groove is not provided, the decoration part will be relatively close to the inside of the electronic device. For some camera modules that are relatively high in the thickness direction of the electronic device, this may cause interference between the decoration part and the camera module, resulting in a situation that the decoration part squeezes the light input end of the camera module. By providing the second positioning groove and fixing the fixing flange in the second positioning groove, the decoration part can be raised as a whole, thus avoiding some high camera modules to meet the assembling height requirement of the camera modules.

In some embodiments of this application, the decoration part includes a first portion and a second portion, the first portion is connected to and arranged around the second portion, the first portion is formed with the accommodating cavity, the second portion is provided with the light hole, the fixing flange is arranged on an outer peripheral surface of the first portion, and in a direction from an inside of the electronic device to an outside of the electronic device, an inner surface of the second portion is located on a side of an inner surface of the fixing flange away from the inside of the electronic device.

In some embodiments of this application, the electronic device further includes a transparent cover plate, the transparent cover plate is fixed to the decoration part and covers an outer end opening of the light hole, and the transparent cover plate does not cover the transparent portion. In this way, on the one hand, the transparent cover plate is used for blocking the light hole, thus achieving the waterproof and dust-proof effect, not affecting the projection of light towards the camera module; and on the other hand, the transparent cover plate does not block the transparent portion, thus helping to project more light emitted by the flash module onto the outer side of the electronic device to improve the light supplementing effect.

In some embodiments of this application, the decoration part includes a first portion and a second portion, one of the first portion and the second portion is connected to and surrounds the other of the first portion and the second portion, the first portion is formed with the accommodating cavity and is provided with the transparent portion, and the second portion is provided with the light hole; and one transparent cover plate is provided, and the transparent cover plate is stacked and fixed onto an outer surface of the second portion, and covers all light holes in the second portion. In this way, all light holes can be covered by using one transparent cover plate, thus helping to simplify the assembling process.

In some embodiments of this application, an end of the first portion provided with the transparent portion protrudes from the outer surface of the second portion in a direction away from the inside of the electronic device to define an accommodating groove with the second portion, the transparent cover plate is located in the accommodating groove, and an edge of the transparent cover plate is stopped on a side wall surface of the accommodating groove. In this way, on the one hand, it can help to reduce the thickness of the electronic device; and on the other hand, the accommodating groove can provide certain protection for the transparent cover plate, thus preventing the transparent cover plate from being damaged by force when the electronic device falls, further preventing the force on the transparent cover plate from being transmitted to the second portion and the camera module, and improving the protection effect on the camera module.

Exemplarily, in order to further improve the protection effect on the transparent cover plate, the outer surface of the transparent portion protrudes from the outer surface of the transparent cover plate in a direction away from the inside of the electronic device.

Exemplarily, the height of the outer surface of the transparent portion that protrudes from the outer surface of the transparent cover plate in the direction away from the inside of the electronic device is not greater than 1 mm. For example, the height of the outer surface of the transparent portion that protrudes from the outer surface of the transparent cover plate in the direction away from the inside of the electronic device is about 0.1 mm, 0.2 mm, 0.3 mm, 0.4 mm, or 0.5 mm. In this way, it helps to reduce the thickness of the electronic device, and avoid the problem that the electronic device is too thick since the height of the outer surface of the transparent portion that protrudes from the outer surface of the transparent cover plate in the direction away from the inside of the electronic device is too large.

Further exemplarily, the outer surface of the transparent cover plate is in flush with the outer surface of the transparent portion. In this way, on the one hand, it can improve the hand feeling of the electronic device in use and prevent the problem that the hand is scratched since the outer surface of the transparent cover plate is not in flush with the outer surface of the transparent portion. On the other hand, it also helps to reduce the thickness of the electronic device, and avoid the problem that the electronic device is too thick since the height of the outer surface of the transparent portion that protrudes from the outer surface of the transparent cover plate in the direction away from the inside of the electronic device is too large or the height of the transparent cover plate that protrudes from the transparent portion is too large.

In some embodiments of this application, multiple transparent cover plates are provided, multiple light holes are provided, the multiple light holes correspond to the multiple transparent cover plates one to one, and each transparent cover plate is located at the outer end opening of the corresponding light hole. In this way, it helps to reducing the material cost of the transparent cover plate.

In some embodiments of this application, the decoration part includes a first portion and a second portion. One of the first portion and the second portion is connected to and surrounds the other of the first portion and the second portion, the first portion is formed with the accommodating cavity and is provided with the transparent portion, and the second portion is provided with the light hole. In a case that an end of the first portion provided with the transparent portion protrudes from the outer surface of the second portion in the direction away from the inside of the electronic device to form the accommodating groove, since multiple transparent cover plates are provided, when the multiple transparent cover plates are arranged on the second portion and accommodated in the accommodating groove, an area in the accommodating groove that is not covered by the transparent cover plates will form a cavity. In actual use by the user, this cavity is prone to accumulating dirt and grime. In order to avoid the accumulation of dirt and grime on the decoration part to a certain extent, the outer surface of the first portion is in flush with the outer surface of the second portion.

In some embodiments of this application, the decoration part includes a second portion, the second portion is provided with the light holes, an outer surface of the second portion is provided with multiple annular flanges, the multiple annular flanges correspond to the multiple light holes one to one, each annular flange surrounds the corresponding light hole, and the transparent cover plate corresponding to the light hole is fixed in the corresponding annular flange, and an edge of the transparent cover plate is stopped on an inner peripheral surface of the annular flange. In this way, on the one hand, it helps to raise the position of the transparent cover plate relative to the back cover. For some camera modules with a relatively large height in the thickness direction of the electronic device, it helps to prevent interference between the light input end of the camera module and the transparent cover plate. On the other hand, it can also play a role of limiting the position of the transparent cover plate.

In some embodiments of this application, one light hole corresponds to one camera module, an end of an inner peripheral wall of the light hole adjacent to an internal accommodating space of the electronic device is provided with a positioning groove, the positioning groove annularly extends along an entire circumferential direction of the light hole, the positioning groove extends to the inner surface of the back cover in a direction close to the internal accommodating space of the electronic device, and an outer peripheral edge of the light input end of the camera module corresponding to the light hole is in positioning fit with the positioning groove. In this way, the positioning groove can be used for playing a role of positioning the camera module, thus ensuring the accuracy of the alignment between the camera module and the decoration part, and helping to improve the photographing effect of the camera module.

In some embodiments of this application, one light hole is provided, multiple camera modules are provided, and the light input ends of the multiple camera modules are located in the one light hole. In this way, one relatively large light hole can be used to correspond to all camera modules, thus not only achieving the normal photographing of the multiple camera modules, but also simplifying the structure of the decoration part and reducing the manufacturing cost of the decoration part.

In some embodiments of this application, the electronic device further includes a camera fixing bracket, the camera fixing bracket is located on the inner side of the back cover and is fixed relative to the back cover, the camera fixing bracket is provided with multiple positioning holes, the multiple positioning holes correspond to the multiple camera modules one to one, and each camera module is arranged in the positioning hole in a penetrating manner and is in positioning fit with the positioning hole. In this way, it helps to improve the fixing effect of the camera module and prevent the camera module from shaking, thus improving the photographing effect of the camera module.

### BRIEF DESCRIPTION OF DRAWINGS

FIG. 1 is a schematic structural diagram of an electronic device according to some embodiments of this application;
FIG. 2 is an exploded diagram of the electronic device shown in FIG. 1;
FIG. 3 is a schematic cross-sectional structural diagram of the electronic device shown in FIG. 1 along line A-A;
FIG. 4 is an enlarged diagram of circled position B of the electronic device shown in FIG. 3;
FIG. 5 is a schematic diagram of connection between a flash module shown in FIG. 2 and an electrical connection structure;
FIG. 6 is a schematic exploded diagram of the flash module shown in FIG. 5 and an electrical connection structure;
FIG. 7 is a schematic diagram of an assembling relationship between a decoration part and flash modules shown in FIG. 2;
FIG. 8 is a schematic diagram of assembling between the decoration part and the flash module shown in FIG. 2 from another perspective;
FIG. 9 is a schematic cross-sectional structural diagram of the electronic device shown in FIG. 1 along line B-B;
FIG. 10 is an enlarged diagram of circled position C of the electronic device shown in FIG. 9;
FIG. 11A is a schematic structural diagram of an electronic device according to some other embodiments of this application;
FIG. 11B is a schematic exploded diagram of the electronic device shown in FIG. 11A;
FIG. 12 is a schematic cross-sectional structural diagram of the electronic device shown in FIG. 11A along line V-V;
FIG. 13 is an enlarged diagram of circled position G of the electronic device shown in FIG. 12;
FIG. 14 is a schematic exploded diagram of an electronic device according to some other embodiments of this application;
FIG. 15 is a schematic cross-sectional structural diagram of the electronic device shown in FIG. 14;
FIG. 16 is an enlarged diagram of circled position D of the electronic device shown in FIG. 15;
FIG. 17 is a schematic cross-sectional structural diagram of an electronic device according to still other embodiments of this application;
FIG. 18 is an enlarged diagram of circled position E of the electronic device shown in FIG. 17;
FIG 19 is a three-dimensional diagram of an electronic device according to some other embodiments of this application;
FIG. 20 is a schematic exploded diagram of the electronic device shown in FIG. 19;
FIG. 21 is a three-dimensional diagram of a decoration part shown in FIG. 19;
FIG. 22 is a schematic cross-sectional structural diagram of the electronic device shown in FIG. 19 along line H-H;
FIG. 23 is a schematic exploded diagram of an electronic device according to some other embodiments of this application;
FIG. 24 is a schematic cross-sectional structural diagram of the electronic device shown in FIG. 23; and
FIG. 25 is a schematic cross-sectional structural diagram of an electronic device according to still other embodiments of this application.

### DESCRIPTION OF EMBODIMENTS

In the embodiments of this application, words such as "exemplarily" or "for example" are used to represent giving an example, an illustration, or a description. Any embodiment or design solution described as "exemplarily" or "for example" in the embodiments of this application should not be explained as being preferred or advantageous over other embodiments or design solutions. In particular, the terms such as "exemplarily" and "for example" as used herein are intended to present the related concept in a specific implementation.

In the embodiments of this application, the terms "first", "second", and "third" are used merely for the purpose of description, and cannot be construed as indicating or implying relative importance or implicitly indicating a quantity of indicated technical features. Thus, a feature limited by "first", "second", or "third" may explicitly or implicitly include one or more of such features.

In the descriptions of the embodiments of this application, the term "at least one" refers to one or more, and "multiple" refers to two or more. In the description of the embodiments of this application, the term "and/or" refers to and covers any of and all possible combinations of one or more associated listed items. The term "and/or" describes an association relationship between associated objects and represents that three relationships may exist. For example, A and/or B may represent the following three cases: only A exists, both A and B exist, and only B exists. In addition, the character "/" in this application usually represents an "or" relationship between associated objects.

In the description of the embodiments of this application, unless otherwise specified and defined explicitly, the terms "mount", "connect", and "connection" should be understood in a broad sense. For example, "connection" may be a detachable connection or a non-detachable connection; or may be a direct connection or an indirect connection through an intermediate medium.

In the description of embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without further limitations, the element limited by the statement "including a ..." does not preclude the presence of another identical element in a process, method, object or apparatus that includes that element. Without further limitations, the element limited by the statement "including a ..." does not preclude the presence of another identical element in a process, method, object or apparatus that includes that element.

As used herein, "parallel", "perpendicular", "equal", and "collinear" include the situations described and situations that are similar to the described situations, and the range of these similar situations is within an acceptable deviation range, where the acceptable deviation range is determined by the measurement in question and errors associated with a specific quantity of measurements (that is, limitations of a measurement system) that are considered by those skilled in the art. For example, "parallel" includes absolute parallelism and approximate parallelism, where the acceptable deviation range for approximate parallelism may be within 5°, for example; "perpendicular" includes absolute perpendicularity and approximate perpendicularity, where the acceptable deviation range for approximate perpendicularity may also be within 5°, for example; "equal" includes absolute equality and approximate equality, where the acceptable deviation range for approximate equality may be, for example, a difference between the two that are equal is less than or equal to 5% of either one; and "collinear" includes both absolute collinearity and approximate collinearity, where approximate collinearity refers to an included angle between two lines being within an acceptable deviation range, such as 5°, and approximate collinearity also includes two lines being parallel and the distance between the two being within an acceptable deviation range, such as 0.5 mm.

With the development of electronic device technology, camera modules are included in electronic devices such as mobile phones, laptops or tablets to meet the photographing function of the electronic devices. In addition, with the increasing demand of users, their requirements for the photographing quality of electronic devices are becoming higher and higher. In the related arts, an electronic device is often equipped with one flash. When photographing in scenarios with light supplementing requirements such as at nights, this flash may be used to supplement light to the camera module to improve the photographing quality of the electronic device. However, the electronic devices in the related arts are still unable to meet the photographing needs at some dark nights, and the photographing quality of the electronic devices is poor. Moreover, in the related arts, the electronic device further includes a decoration part in addition to a camera module and a flash. In order to facilitate the projection of light from the flash to the outside of the electronic device, a flash hole running through the decoration part is often provided in the decoration part. The arrangement of the flash hole results in low structural strength of the decoration part, so that it is prone to damage. Besides, the decoration part cannot play a role of well protecting and hiding the flash.

To solve the above technical problem, an improvement idea of this application is as follows: multiple flash modules are arranged in the electronic device,
and the multiple flash modules are spaced apart. In this way, the multiple flash modules can operate at the same time to improve the light supplementing effect, thus improving the photographing quality of the electronic device in a relatively dark environment, and improving the user experience. On this basis, the flash hole running through the decoration part is no longer provided in the decoration part, but an accommodating cavity for accommodating the multiple flash modules is formed in the decoration part, the decoration part is provided with a transparent portion, and the transparent portion defines a wall surface of one end of the accommodating cavity away from the inside of the electronic device, so that the flash modules can be located on the side towards which the inner surface of the transparent portion faces, that is, the flash modules can be hidden on the inner side of the transparent portion. Therefore, without providing the flash hole running through the decoration part in the decoration part, the flash modules can project light to the outer side of the electronic device, thus achieving the purpose of supplementing light to the camera module, further helping to improve the structural strength of the decoration part, and protecting and hiding the flash modules by using the transparent portion.

Based on the above improvement idea, the embodiments of this application will be introduced below in detail with reference to the drawings. Before introducing the embodiments of this application, the application scenarios of this application will be introduced first.

This application further provides an electronic device. The electronic device may be a portable electronic device or any other suitable electronic device. For example, the electronic device may be a mobile phone, a tablet personal computer, a laptop computer, a personal digital assistant (PDA), a camera, a personal computer, a personal computer, a notebook computer, a vehicle-mounted device, a wearable device, augmented reality (AR) glasses, an AR helmet, virtual reality (VR) glasses, or a VR helmet, etc.

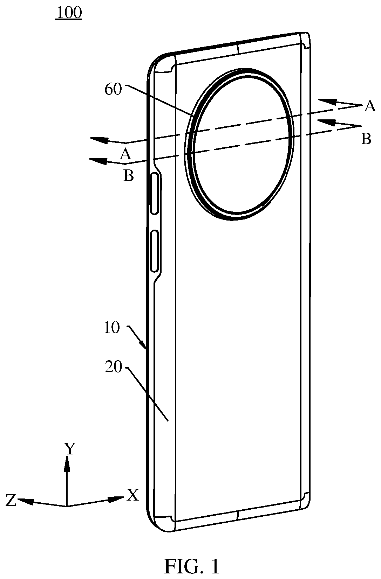

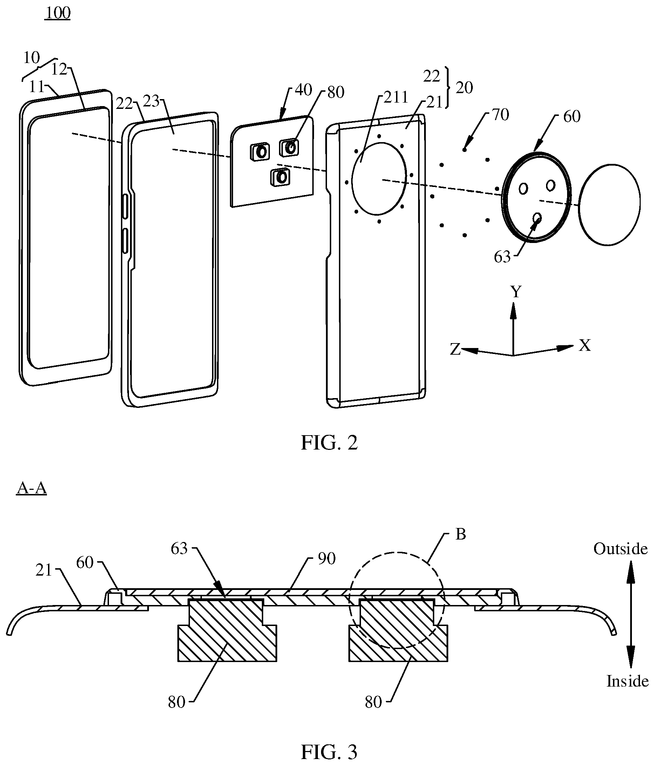

Refer to FIG. 1 and FIG. 2. FIG. 1 is a schematic structural diagram of an electronic device 100 according to some embodiments of this application. FIG. 2 is an exploded diagram of the electronic device 100 shown in FIG. 1. In the embodiment, the electronic device 100 is a mobile phone. The electronic device 100 includes a screen 10, a back housing 20, a main circuit board 40, a camera module 80, a decoration part 60, and multiple flash modules 70.

It may be understood that FIG. 1 and FIG. 2 schematically show only some components included in the electronic device 100, and the actual shapes, actual sizes, actual positions, and actual composition of these components are not limited by FIG. 1 and FIG. 2. In some other examples, the electronic device 100 may alternatively not include the screen.

The screen 10 is used for displaying an image, a video, or the like. The screen 10 includes a front cover plate 11 and a display screen 12. The front cover plate 11 can transmit light. The front cover plate 11 and the display screen 12 are stacked and fixedly connected to each other. The front cover plate 11 is mainly used for protecting the display screen 12 and prevent dust. The material of the front cover plate 11 includes, but not limited to, glass, ceramic, or plastic. The display screen 12 may be a flexible display screen or may be a rigid display screen. For example, the display screen 12 may be an organic light-emitting diode (OLED) display screen, an active-matrix organic light-emitting diode (AMOLED) display screen, a mini organic light-emitting diode display screen, a micro organic light-emitting diode display screen, a micro organic light-emitting diode display screen, a quantum dot light emitting diode (QLED) display screen, a liquid crystal display (LCD), etc.

The back housing 20 is used for protecting the electronic components in the electronic device 100. The back housing 20 includes a back cover 21 and a frame 22. The material of the back cover 21 includes, but not limited to glass, metal, ceramic, and plastic. The back cover 21 is located on a side of the display screen 12 away from the front cover plate 11, and is stacked with the front cover plate 11 and the display screen 12. The frame 22 is located between the back cover 21 and the front cover plate 11. The material of the frame 22 includes, but not limited to glass, metal, ceramic, and plastic. The frame 22 is fixed around an edge of the back cover 21. Exemplarily, the frame 22 may be fixedly connected to the back cover 21 by gluing, welding, clamping, or screwing. The frame 22 and the back cover 21 may alternatively be an integrally molded structure, that is, the frame 22 and the back cover 21 are an integral structure. The front cover plate 11 may be fixed to the frame 22 by gluing. The front cover plate 11, the back cover 21, and the frame 22 form a housing of the electronic device 100. The housing is provided with an internal accommodating space. The internal accommodating space accommodates the display screen 12, the main circuit board 40, and the camera module.

To facilitate the following description, a stacking direction of the front cover plate 11, the display screen 12, and the back cover 21 in the electronic device 100 is defined as a Z-axis direction, which may also be referred to as a thickness direction of the electronic device 100. A plane parallel to the front cover plate 11, the display screen 12, and the back cover 21 is an XY plane. An X-axis direction may be a width direction of the electronic device 100, and a Y-axis direction may be a length direction of the electronic device 100.

The main circuit board 40 is fixed in the internal accommodating space of the electronic device 100. Specifically, continuously referring to FIG. 2, the electronic device 100 further includes a middle plate 23. The middle plate 23 is fixed to an inner surface of the frame 22. Exemplarily, the middle plate 23 may be fixed onto the frame 22 by welding, clamping, screwing, or gluing. The middle plate 23 and the frame 22 may alternatively be an integrally molded structure. The middle plate 23 is used as a "skeleton" of the structure of the electronic device 100, and the main circuit board 40 may be fixed onto the surface of a side of the middle plate 23 facing towards the back cover 21 by threading, clamping, or welding. In other examples, the middle plate 23 may not be provided, but the main circuit board 40 may be fixed to the surface of the display screen 12 facing towards the back cover 21.

It is to be understood that in the above embodiments and the following embodiments, "inside" and "outside" used to describe the various components in the electronic device 100 are relative directions. "Inside" refers to a direction close to the internal accommodating space of the electronic device 100, while "outside" refers to a direction away from the internal accommodating space of the electronic device 100. Specifically, "inner side" refers to a side of a described component close to the internal accommodating space of the electronic device 100, "inner surface" refers to a surface of a described component close to the internal accommodating space of the electronic device 100, and correspondingly, "inner end" refers to an end of a described component close to the internal accommodating space of the electronic device 100; and on the contrary, "outer side" refers to a side of a described component away from the internal accommodating space of the electronic device 100, "outer surface" refers to a surface of a described component away from the internal accommodating space of the electronic device 100, and correspondingly, "outer end" refers to an end of a described component away from the internal accommodating space of the electronic device 100.

The camera module 80 is used for taking a photo/video. Exemplarily, the camera module 80 may include, but not limited to, a wide-angle camera module, a telephoto camera module, and a main camera module. In some embodiments, in order to improve the photographing quality of the electronic device 100, multiple camera modules 80 are provided. "Multiple" means two or more. For example, as shown in FIG. 2, three camera modules 80 are provided. Of course, it is to be understood that in other examples, one camera module 80 may be provided.

The camera module 80 is fixed in the internal accommodating space of the electronic device 100. The camera module 80 is a rear camera module of the electronic device 100. The camera module 80 may be fixed onto a surface of the main circuit board 40 facing towards the back cover 21 by threading, clamping, or welding. In some embodiments, the camera module 80 may be fixed to a surface of the middle plate 23 facing towards the back cover 21 by threading, clamping, or welding. Alternatively, in a case that the electronic device 100 does not include the middle plate 23, the camera module 80 may be fixed to a surface of the display screen 12 facing towards the back cover 21. The camera module 80 is electrically connected to the main circuit board 40, in order to introduce electricity and control signals to the camera module 80.

The back cover 21 is provided with a mounting opening 211 at a position corresponding to the camera module 80. The shape of the mounting opening 211 includes, but not limited to, a circular shape, a square shape, a rectangular shape, an elliptical shape, an oval shape, or an irregular shape.

The decoration part 60 is mounted at the mounting opening 211. The material of the decoration part 60 includes, but not limited, to metal, plastic, and combinations thereof. The shape of an outer peripheral contour of the decoration part 60 includes, but not limited to, a circular shape, a square shape, a rectangular shape, an elliptical shape, an oval shape, or an irregular shape.

The decoration part 60 is provided with a light hole 63. The light hole 63 runs through the decoration part 60 in the thickness direction (i.e., Z-axis direction) of the decoration part 60. The shape of the light hole 63 includes, but not limited to, a circular shape, a square shape, a rectangular shape, an elliptical shape, an oval shape, or an irregular shape. The light hole 63 is opposite to the mounting opening 211. The light hole 63 is used for accommodating the light input end of the camera module 80, so as to allow light to enter the camera module 80. In some embodiments, continuously referring to FIG. 2, multiple light holes 63 are provided. The multiple light holes 63 are spaced apart. As described above, multiple camera modules 80 are also provided. The multiple camera modules 80 correspond to the multiple light holes 63 one to one. The multiple light holes 63 are spaced apart in the circumferential direction of the decoration part 60. For example, the multiple light holes 63 are uniformly spaced apart in the circumferential direction of the decoration part 60. In other examples, one camera module 80 and one light hole 63 may also be respectively provided, as long as one camera module 80 corresponds to one light hole 63.

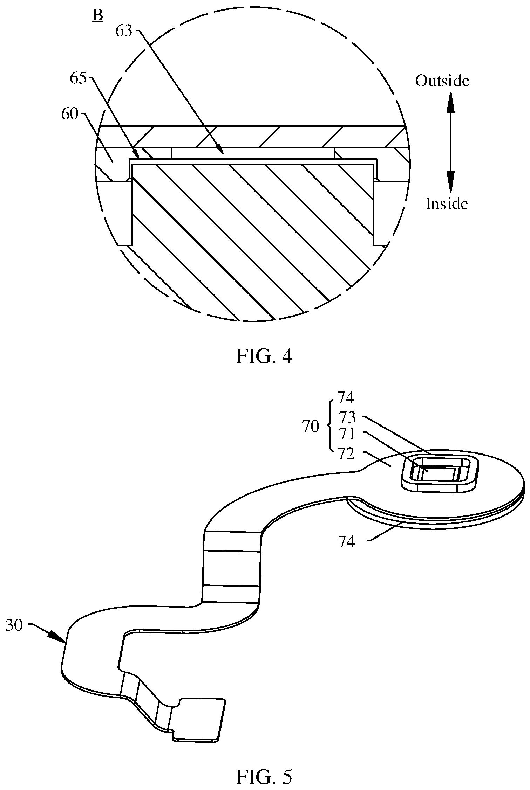

Refer to FIG. 3. FIG. 3 is a schematic cross-sectional structural diagram of the electronic device 100 shown in FIG. 1 along a line A-A. It is to be understood that "along line A-A" means being along a plane where the line A-A and arrows at two ends of the line A-A are located. Descriptions of similar accompanying drawings below should be understood in the same way, which will not be repeated hereafter. FIG. 3 only shows the cross-sectional structures of the back cover 21, the camera module 80, the decoration part 60, and the transparent cover plate 90 in the electronic device 100 along line A-A, and other structures are not shown. The light input end of each camera module 80 is positioned in the corresponding light hole 63. Specifically, refer to FIG. 4. FIG. 4 is an enlarged diagram of circled position B of the electronic device 100 shown in FIG. 3. An inner end of an inner peripheral wall of the light hole 63 (i.e., the end adjacent to the internal accommodating space of the electronic device 100) is provided with a positioning groove 65. The positioning groove 65 annularly extends along the entire circumferential direction of the light hole 63. In addition, the positioning groove 65 extends to the inner surface of the back cover 21 in a direction close to the internal accommodating space of the electronic device 100. An outer peripheral edge of the light input end of the camera module 80 corresponding to the light hole 63 is in positioning fit with the positioning groove 65, so that the positioning groove 65 can be used for playing a role of positioning the camera module 80, thus ensuring the accuracy of the alignment between the camera module 80 and the decoration part 60, and helping to improve the photographing effect of the camera module 80. Of course, it is to be understood that in other examples, the positioning groove 65 may not be provided, but only the light input end of the camera module is accommodated in the light hole.

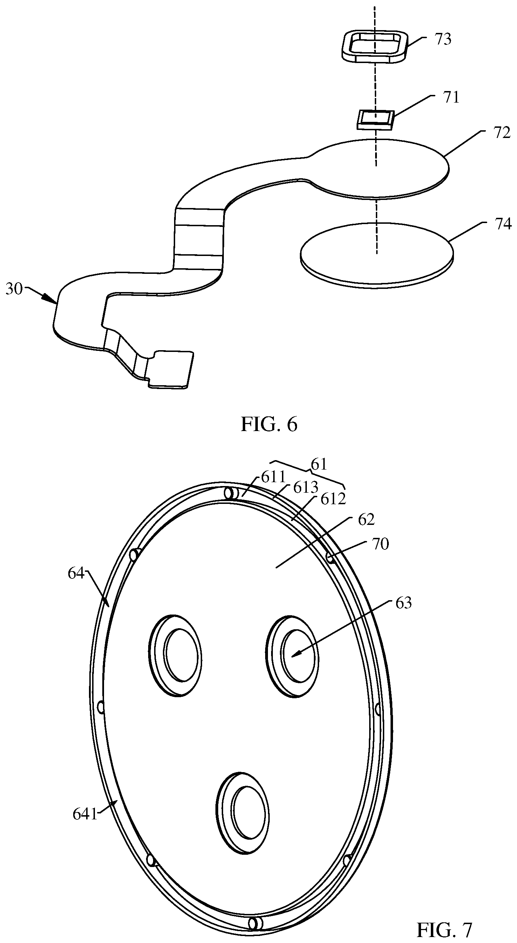

The flash module 70 is used for working in a dark environment where the electronic device 100 is located, so as to project light towards the outer side of the electronic device 100 to supplement light for the photographing of the camera module 80 and improve the photographing effect of the camera module 80. Refer to FIG. 5 and FIG. 6. FIG. 5 is a schematic diagram of connection between a flash module 70 shown in FIG. 2 and an electrical connection structure 30. FIG. 6 is a schematic exploded diagram of the flash module 70 shown in FIG. 5 and an electrical connection structure 30. The flash module 70 includes a circuit board 72 and a flash 71 arranged on an outer surface of the circuit board 72. The flash 71 is used for introducing electricity through the circuit board 72. The flash 71 may be arranged on the circuit board 72 by adopting a Surface Mount Technology (SMT) to reduce the thickness of the flash module 70. The circuit board 72 includes, but not limited to, a Printed Circuit Board (PCB) and a Flexible Printed Circuit board (FPC). In one flash module 70, the number of the flashes 71 includes, but not limited to, one or more. In a case that multiple flashes 71 are provided, for example, two or three flashes 71 are provided, the multiple flashes 71 are simultaneously arranged on the same circuit board 72.

In some embodiments, continuously referring to FIG. 5 and FIG. 6, the flash module 70 further includes a reinforcement plate 74. The reinforcement plate 74 is stacked on the surface (i.e., inner surface) of the circuit board 72 away from the flash 71. In some embodiments, the reinforcement plate 74 is fixed onto the surface of the circuit board 72 away from the flash 71 by gluing. The reinforcement plate 74 is used for increasing the structural strength of the circuit board 72 and preventing the circuit board 72 from wrinkling and deforming. The reinforcement plate 74 may be a metal plate. For example, it may be an aluminum plate, a steel plate, an iron plate, or the like. In this way, on the one hand, it can prevent the circuit board 72 from wrinkling and deforming, and on the other hand, the metal material has better thermal conductivity and can achieve a heat dissipation effect on the circuit board 72. In some other embodiments, the reinforcement plate 74 may also be a plastic plate, a ceramic plate, a glass plate, or the like, which is not specifically limited in the embodiments of this application. In a case that the circuit board 72 is a PCB, the structural strength of the circuit board 72 is better, and it can prevent wrinkling and deformation by relying on its own structural strength. In this way, the reinforcement plate 74 may not be arranged.

In some embodiments, continuously referring to FIG. 5 and FIG. 6, the flash module 70 further includes a protection ring 73. The protection ring 73 is fixed onto the circuit board 72, the protection ring 73 is arranged around the circumferential direction of the flash 71, and the height of the protection ring 73 protruding from the circuit board 72 is greater than or equal to the height of the flash 71 protruding from the circuit board 72. In this way, the protection ring 73 can be used for protecting the flash 71, thus preventing the flash module 70 from being damaged due to collision during transportation and mounting. The material of the protection ring 73 may be metal, plastic, ceramic, glass, or the like, which is not specifically limited in the embodiments of this application. In some embodiments, the material of the protection ring 73 may be metal. For example, it may be stainless steel, aluminum alloy, magnesium aluminum alloy, or the like. In this way, on the one hand, the metal material has better structural stability and better protection effect, and on the other hand, it can achieve a certain heat dissipation effect. Of course, it is to be understood that in other examples, the protection ring 73 may not be arranged.

In order to introduce electricity to the flash module 70, in some embodiments, continuously referring to FIG. 5 and FIG. 6, the electronic device 100 further includes an electrical connection structure 30. The electrical connection structure 30 may be an FPC, a PCB, or formed by weaving at least one wire through a flexible material, which is not specifically limited here. One end of the electrical connection structure 30 is fixed and electrically connected to the flash module 70. Specifically, one end of the electrical connection structure 30 is fixed and electrically connected to the circuit board 72 in the flash module 70. The other end of the electrical connection structure 30 is used for being fixed and electrically connected to the main circuit board 40. Exemplarily, the other end of the electrical connection structure 30 may be electrically connected to the main circuit board 40 in FIG. 2 by abutting through an elastic piece, or plugging through a plug-in component.

In some embodiments, the multiple flash modules 70 correspond to the multiple electrical connection structures 30 one to one and are electrically connected thereto. In this way, the independent wiring of the multiple different flash modules 70 can be achieved, thus not affecting the operation of other electrical connection structures 30 in a case that one electrical connection structure 30 is damaged due to squeezing, and ensuring the normal operation of the flash modules 70 corresponding to other electrical connection structures 30. Exemplarily, the circuit board 72 of the flash module 70 and the electrical connection structure 30 may be an integrally molded part, thus improving the connection strength between the two. Further exemplarily, the circuit board 72 of the flash module 70 may also be connected to the electrical connection structure 30 by gluing or welding. In other examples, one electrical connection structure 30 may also be fixed and electrically connected to all flash modules 70.

The flash modules 70 may be mounted on the decoration part 60. Refer to FIG. 7. FIG. 7 is a schematic diagram of an assembling relationship between the decoration part 60 and the flash modules 70 shown in FIG. 2. The decoration part 60 is further formed with an accommodating cavity 64. The accommodating cavity 64 is spaced apart from the light holes 63. Multiple flash modules 70 are spaced apart in the accommodating cavity 64. Exemplarily, the flash modules 70 may be arranged in the accommodating cavity 64 of the decoration part 60 by gluing, welding, or embedding. By arranging the flash modules 70 in the accommodating cavity 64, it can help to save the internal accommodating space of the electronic device 100 and facilitate the arrangement of other structures in the electronic device 100.

In order to facilitate the emission of light of the flash modules 70 from the accommodating cavity 64, the decoration part 60 includes a transparent portion 611. The transparent portion 611 can transmit light. The transparent portion 611 is located at an outer end of the accommodating cavity 64, and the transparent portion 611 defines a wall surface of an end (i.e., the outer end) of the accommodating cavity 64 away from the inside of the electronic device 100. That is to say, the end wall of the accommodating cavity 64 away from the inside of the electronic device 100 is defined by the transparent portion 611. Each flash module 70 outputs light towards the side where the transparent portion 611 is located.

In this way, on the one hand, the arrangement of the multiple flash modules 70 can make the electronic device 100 have a good light supplementing effect, thus meeting the photographing needs at some dark nights and improving the photographing quality of the electronic device 100. On the other hand, the multiple flash modules 70 are arranged in the accommodating cavity 64 and the flash modules 70 are located on the side towards which the inner surface of the transparent portion 611 faces, so that the flash holes running through the decoration part 60 are no longer provided in the decoration part 60, thus not only ensuring the normal operation of the flash modules 70, but also helping to improve the structural strength of the decoration part 60, and protecting and hiding the flash modules 70 by using the decoration part 60.

Exemplarily, the material of the transparent portion 611 includes, but not limited to, plastic and glass.

In order to improve the transparency, the transmittance of the transparent portion 611 is greater than or equal to 80%. For example, the transmittance of the transparent portion 611 is 85%-95%. For another example, the transmittance of the transparent portion 611 is 90%-95%.

Continuously referring to FIG. 7, the end of the accommodating cavity 64 adjacent to the inside of the electronic device 100 is provided with a wiring opening 641, one end of each electrical connection structure 30 is fixed and electrically connected to the corresponding flash module 70 through the wiring opening 641, and the other end of each electrical connection structure 30 extends to the side towards which the inner surface of the back cover 21 faces, so as to facilitate the fitting with the main circuit board 40. In this way, it facilitates the wiring between the flash module 70 and the electrical connection structure 30, so as to introduce electricity into the flash module.

It is to be understood that "one end of each electrical connection structure 30 is fixed and electrically connected to the corresponding flash module 70 through the wiring opening 641" includes three situations. Situation I: one end of each electrical connection structure 30 runs through the wiring opening 641, stretches into the accommodating cavity 64, and is fixed and electrically connected to the corresponding flash module 70 located in the accommodating cavity 64. Situation II: the electrical connection structure 30 does not stretch into the accommodating cavity 64, but the entire electrical connection structure 30 is located outside the accommodating cavity 64, the flash module 70 is arranged in the wiring opening 641 in a penetrating manner, and one end of each electrical connection structure 30 is fixed and electrically connected to the corresponding flash module 70 outside the accommodating cavity 64. Situation III: one end of each electrical connection structure 30 is located inside the wiring opening 641 and is fixed and connected to the corresponding flash module 70. In order to improve the light supplementing effect of the flash module 70 on the camera module 80, continuously referring to FIG. 7, in some embodiments, the decoration part 60 includes a first portion 61 and a second portion 62. Specifically, the first portion 61 is connected to the second portion 62. The first portion 61 is annular, and the first portion 61 is arranged around an edge of the second portion 62. Exemplarily, the first portion 61 includes, but not limited to, a circular ring, a square shape, a rectangular ring, or an irregularly-shaped ring. The second portion 62 is sheet-like. Exemplarily, the shape of the second portion 62 includes, but not limited to, a circular shape, a square shape, a rectangular shape, or an irregular shape, as long as the shape of the first portion 61 adapts to the shape of the second portion 62. In other examples, the second portion 62 may also be annular, and the second portion 62 may be arranged around an edge of the first portion 61, as long as one of the first portion 61 and the second portion 62 is ensured to surround the other of the first portion 61 and the second portion 62. In the following description, description will be made by taking the first portion 61 surrounding the second portion 62 as an example.

Continuously referring to FIG. 7, the first portion 61 is formed with an accommodating cavity 64, and the first portion 61 includes a transparent portion 611. Multiple flash modules 70 inside the accommodating cavity 64 are spaced apart in the circumferential direction of the decoration part 60, that is, in the circumferential direction of the first portion 61. Light holes 63 are specifically provided in the second portion 62. In this way, the multiple flash modules 70 are located on the outer peripheries of the multiple light holes 63, thus improving the light supplementing effect on the multiple camera modules 80 at the second portion 62, meeting the photographing needs at some dark nights, and improving the photographing quality of the electronic device 100.

On this basis, in order to further improve the light supplementing effect of the flash modules 70, in some embodiments, the accommodating cavity 64 is in an annular shape extending along the circumferential direction of the decoration part 60, and the transparent portion 611 is in an annular shape extending along the circumferential direction of the decoration part 60. In this way, when the flash modules 70 operate, the light projected by the flash modules 70 can be projected onto the annular transparent portion 611, thus making the entire transparent portion 611 present a luminous effect, forming an annular light strip effect, and not only helping to further improve the light supplementing effect and improve the photographing quality of the electronic device 100, but also helping to make the electronic device 100 more recognizable and competitive and improve the user experience. In other examples, the accommodating cavity 64 may also be in an arc shape, a broken line shape, or an irregular shape extending along the circumferential of the decoration part 60, and the transparent portion 611 is in an arc shape, a broken line shape, or irregular shape adapting to the extending shape of the accommodating cavity 64.

On this basis, in some embodiments, multiple flash modules 70 are uniformly spaced apart in the circumferential direction of the decoration part 60, thus improving the uniformity of light at the transparent portion 611, and further improving the light supplementing effect and light supplementing uniformity of the flash module 70 on the camera module 80. For example, in a case that two flash modules 70 are provided, the two flash modules 70 are arranged opposite to each other in a radial direction of the first portion 61. For another example, in a case that three or more flash modules 70 are provided, among any adjacent three flash modules 70 along the circumferential direction of the accommodating cavity 64, the distance between two adjacent flash modules 70 is equal to the distance between the other two adjacent flash modules 70.

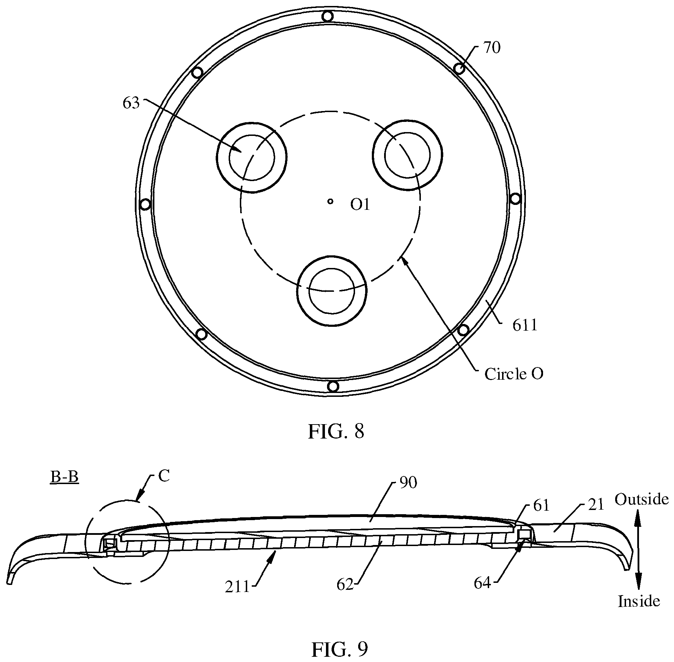

On this basis, in order to further improve the light supplementing effect and light supplementing uniformity of the flash module 70 on the camera module 80, referring to FIG. 8, where FIG. 8 is an assembling diagram of the decoration part 60 and the flash modules 70 shown in FIG. 2 from another perspective, orthographic projections of centerlines of the multiple light holes 63 in a plane parallel to the second portion 62 are located on the same reference circle O, and an orthographic projection of a centerline of the transparent portion 611 in the plane parallel to the second portion 62 is overlapped with a circle center O1 of the reference circle O. That is to say, a centerline of a cylindrical surface where the centerlines of the multiple light holes 63 are located is collinear with the centerline of the transparent portion 611. In this way, on the one hand, it helps to optimize the relative position relationship between the transparent portion 611 and the multiple light holes 63, and improve the light supplementing effect. On the other hand, the entire structure is more symmetrical, thus making it easier to manufacture and further improving the appearance attractiveness of the electronic device 100. Of course, it is to be understood that in other examples, in a case that one light hole 63 is provided, the light hole 63 corresponds to one camera module 80, and a centerline of the light hole is collinear with the centerline of the transparent portion.

On this basis, in order to further improve the light supplementing effect and light supplementing uniformity of the flash module 70 on the camera module 80, in some embodiments, multiple light holes 63 at the second portion 62 are uniformly spaced apart in the circumferential direction of the decoration part 60.

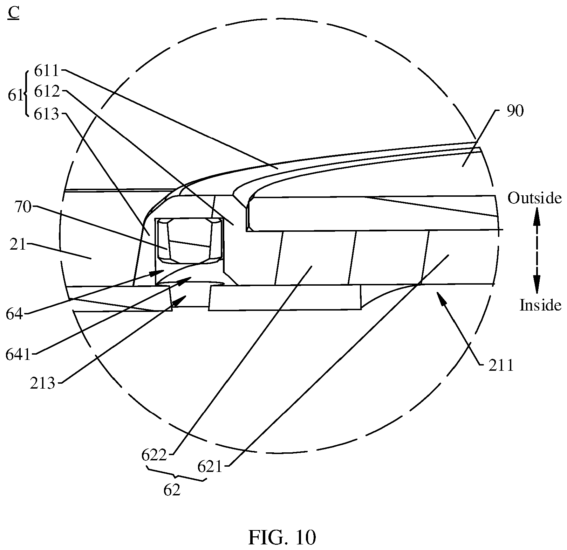

On the basis of any embodiment described above, refer to FIG. 9 and FIG. 10. FIG. 9 is a schematic cross-sectional structural diagram of the electronic device 100 shown in FIG. 1 along line B-B. FIG. 10 is an enlarged diagram of circled position C of the electronic device 100 shown in FIG. 9. FIG. 9 and FIG. 10 only show the cross-sectional structures of the back cover 21, the flash module 70, the decoration part 60, and the transparent cover plate 90 in the electronic device 100 along line B-B, and other structures are not shown. The first portion 61 further includes a first connection plate 612 and a second connection plate 613. The first connection plate 612 and the second connection plate 613 are both annularly cylindrical. The first connection plate 612 is connected to an outer peripheral edge of the second portion 62, and the second connection plate 613 surrounds an outer periphery of the first connection plate 612 and is spaced apart from the first connection plate 612. The transparent portion 611 is connected between an outer end of the first connection plate 612 and an outer end of the second connection plate 613. In this way, the first connection plate 612, the transparent portion 611, and the second connection plate 613 define an accommodating cavity 64. The inner end of the accommodating cavity 64 formed thereby can be opened, thus defining an annular wiring opening 641. In this way, the structure is simple, and the processing and manufacturing are facilitated.

Exemplarily, the flash module 70 may be fixed to the first connection plate 612 and/or the second connection plate 613 by gluing. Further exemplarily, the flash module 70 is clamped between the first connection plate 612 and the second connection plate 613. Further exemplarily, the flash module 70 is clamped between the first connection plate 612 and the second connection plate 613, the flash module 70 is glued with the first connection plate 612, and/or the flash module 70 is glued with the second connection plate 613.

On this basis, in order to simplify the manufacturing process of the decoration part 60, reduce the manufacturing cost, and improve the structural strength of the decoration part 60, the first portion 61 and the second portion 62 are an integrally molded part. For example, the decoration part 60 is a plastic part, and the first portion 61 and the second portion 62 may be integrally injection-molded by adopting an injection molding process.

In some embodiments, continuously referring to FIG. 9 and FIG. 10, the decoration part 60 is located on a side towards which an outer surface of the back cover 21 faces, and is fixed to the portion of the outer surface of the back cover 21 that surrounds the mounting opening 211. Specifically, for the assembled electronic device 100, the relative position relationship between the camera module 80 and the mounting opening 211 is fixed. In a case that the decoration part 60 is located on the side towards which the outer surface of the back cover 21 faces as a whole, the decoration part 60 will be relatively far away from the inside of the electronic device 100. For some camera modules 80 with a relatively large height in the Z direction, interference between the decoration part 60 and the camera module 80 can be avoided, and the situation of the decoration part 60 squeezing the light input end of the camera module 80 can be avoided, thus meeting the assembling height requirement of the camera module 80, simplifying the mounting of the decoration part 60, and facilitating the assembling.

Specifically, an orthographic projection of the first portion 61 on the back cover 21 is located on the outer periphery of the mounting opening 211. The first portion 61 is fixed onto the portion of the outer surface of the back cover 21 that surrounds the mounting opening 211. A portion of the back cover 21 opposite to the wiring opening 641 is provided with multiple wiring avoidance openings 213. The multiple wiring avoidance openings 213 are spaced apart in a circumferential direction of the decoration part 60. The multiple wiring avoidance openings 213 correspond to the multiple flash modules 70 one to one. In this way, on the one hand, in the mounting process, after the decoration part 60 and the back cover 21 are mounted in place, the flash module 70 can be mounted in the accommodating cavity 64 sequentially through the wiring avoidance opening 213 and the annular wiring opening 641. On the other hand, it can also help the end of the electrical connection structure 30 electrically connected to each flash module 70 to pass through the wiring avoidance opening 213 corresponding to the flash module 70 and then be electrically connected to the corresponding flash module 70, thus making the electrical connection structures 30 of the multiple flash modules 70 spaced apart, so as to ensure that the multiple electrical connection structures 30 are independent of each other and prevent the problem of short circuiting in a case that the multiple electrical connection structures 30 are connected together.

Of course, it is to be understood that in other examples, in a case that all flash modules 70 are electrically connected to the same electrical connection structure 30, one wiring avoidance opening 213 may be provided.

Specifically, an inner end of the first connection plate 612 and an inner end of the second connection plate 613 are both connected to the back cover 21. For example, the inner end of the first connection plate 612 and the inner end of the second connection plate 613 are both connected to the outer surface of the back cover 21 by gluing.

On this basis, in order to further improve the reliability of the connection between the decoration part 60 and the back cover 21, the outer peripheral edge of the second portion 62 is fixed to an area of the outer surface of the back cover 21 between the mounting opening 211 and the first portion 61. Specifically, the second portion 62 includes a first sub-portion 621 and a second sub-portion 622. An edge of an orthographic projection of the first sub-portion 621 on the back cover 21 is overlapped with an edge of the mounting opening 211. The second sub-portion 622 surrounds an outer periphery of the first sub-portion 621. In addition, the second sub-portion 622 is fixed to the area of the outer surface of the back cover 21 between the mounting opening 211 and the first portion 61. Exemplarily, the second sub-portion 622 is connected to the outer surface of the back cover 21 by gluing or welding.

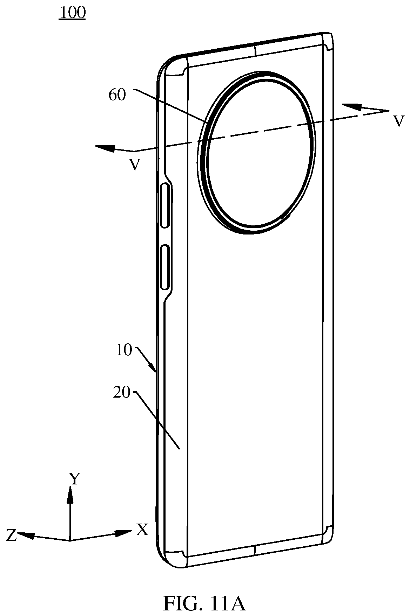

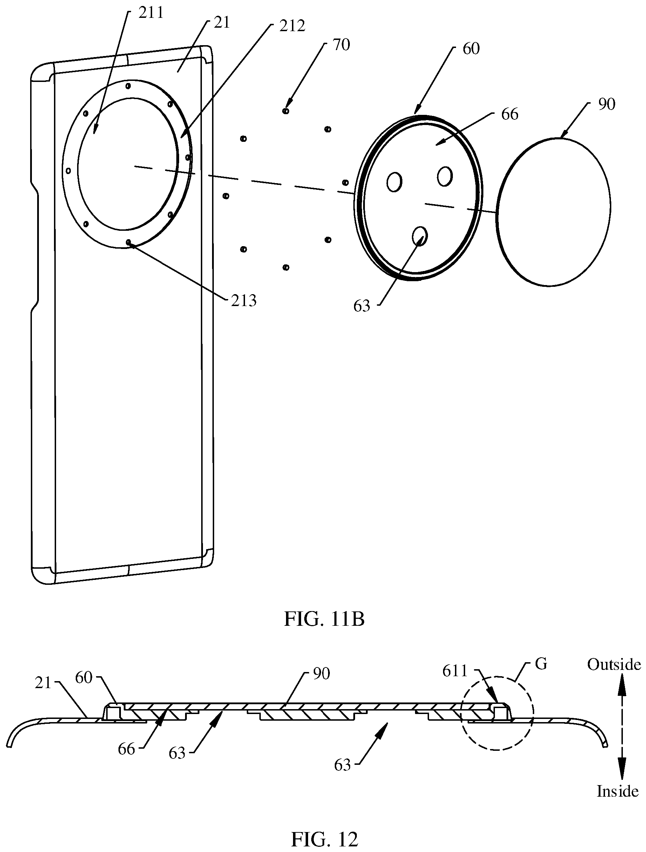

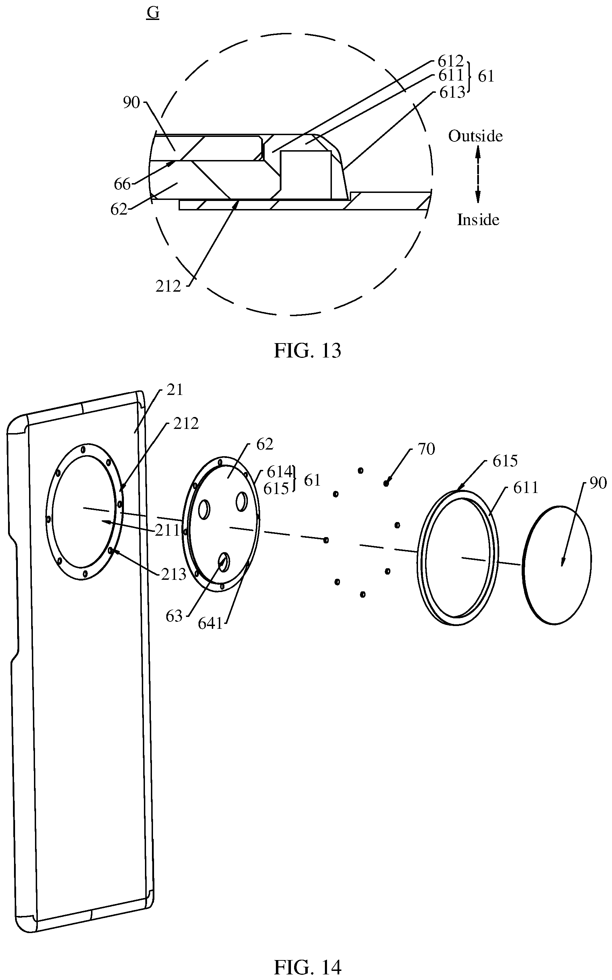

Since the decoration part 60 is fixed onto the outer surface of the back cover 21, this will cause the overall thickness of the electronic device 100 to increase. In some embodiments, in order to reduce the thickness of the electronic device 100, refer to FIG. 11A and FIG. 11B. FIG. 11A is a schematic structural diagram of an electronic device 100 according to some other embodiments of this application. FIG. 11B is a schematic exploded diagram of the electronic device 100 shown in FIG. 11A. FIG. 11A and FIG. 11B only show the back cover 21, the flash module 70, the decoration part 60, and the transparent cover plate 90. Other structures are not shown. Referring to FIG. 11B, the outer surface of the back cover 21 is recessed in a direction towards the inner surface of the back cover 21 to form a first positioning groove 212. The first positioning groove 212 is arranged around the mounting opening 211, and the first positioning groove 212 extends to the mounting opening 211 in a direction towards the mounting opening 211. Refer to FIG. 12 and FIG. 13. FIG. 12 is a schematic cross-sectional structural diagram of the electronic device shown in FIG. 11A along line V-V. FIG. 13 is an enlarged diagram of circled position G of the electronic device shown in FIG. 12. The inner end of the first portion 61 is fixed into the first positioning groove 212, that is, the inner end of the first connection plate 612 and the inner end of the second connection plate 613 are located in the first positioning groove 212, and the wiring avoidance openings 213 are located at the first positioning groove 212. In this way, it helps to reduce the height of the decoration part 60 protruding from the outer surface of the back cover 21, thus reducing the overall thickness of the electronic device 100. Of course, it is to be understood that in other examples, the first positioning groove 212 may not be provided (in combination with FIG. 2 and FIG. 3).

On the basis of any embodiment described above, continuously referring to FIG. 12 and FIG. 13, the electronic device 100 further includes a transparent cover plate 90. The material of the transparent cover plate 90 includes, but not limited to, glass and plastic. The transparent cover plate 90 is fixed to the decoration part 60. The transparent cover plate 90 is used for covering an outer end opening of the light hole 63. The transparent cover plate 90 does not cover the transparent portion 611. In this way, on the one hand, the transparent cover plate 90 is used for blocking the light hole 63, thus achieving the waterproof and dust-proof effect, not affecting the projection of light towards the camera module 80; and on the other hand, the transparent cover plate 90 does not block the transparent portion 611, thus helping to project more light emitted by the flash modules 70 onto the outer side of the electronic device 100 to improve the light supplementing effect. In other examples, the transparent cover plate 60 may also cover the light hole 63 and the transparent portion 611 simultaneously.

On this basis, in some embodiments, one transparent cover plate 90 is provided, and the transparent cover plate 90 is stacked and fixed onto an outer surface of the second portion 62, and covers all light holes 63 in the second portion 62. In this way, all light holes 63 can be covered by using one transparent cover plate 90, thus helping to simplify the assembling process.

On this basis, continuously referring to FIG. 12 and FIG. 13, the outer end of the first portion 61 (i.e., the end of the first portion 61 provided with the transparent portion 611) protrudes from the outer surface of the second portion 62 in a direction away from the inside of the electronic device 100. In this way, an accommodating groove 66 can be defined between the outer surfaces of the first portion 61 and the second portion 62. The transparent cover plate 90 is accommodated in the accommodating groove 66, and an edge of the transparent cover plate 90 is stopped on a side wall surface of the accommodating groove. In this way, on the one hand, it can help to reduce the thickness of the electronic device 100; and on the other hand, the accommodating groove 66 can provide certain protection for the transparent cover plate 90, thus preventing the transparent cover plate 90 from being damaged by force when the electronic device 100 falls, further preventing the force on the transparent cover plate 90 from being transmitted to the second portion 62 and the camera module 80, and improving the protection effect on the camera module 80.

On this basis, in order to further improve the protection effect on the transparent cover plate 90, the outer surface of the transparent portion 611 protrudes from the outer surface of the transparent cover plate 90 in a direction away from the inside of the electronic device 100.

Exemplarily, the height of the outer surface of the transparent portion 611 that protrudes from the outer surface of the transparent cover plate 90 in the direction away from the inside of the electronic device 100 is not greater than 1 mm. For example, the height of the outer surface of the transparent portion 611 that protrudes from the outer surface of the transparent cover plate 90 in the direction away from the inside of the electronic device 100 is about 0.1 mm, 0.2 mm, 0.3 mm, 0.4 mm, or 0.5 mm. In this way, it helps to reduce the thickness of the electronic device 100, and avoid the problem that the electronic device 100 is too thick since the height of the outer surface of the transparent portion 611 that protrudes from the outer surface of the transparent cover plate 90 in the direction away from the inside of the electronic device 100 is too large.

In some other examples, the outer surface of the transparent cover plate 90 may also be in flush with the outer surface of the transparent portion 611. In this way, on the one hand, it can improve the hand feeling of the electronic device 100 in use and prevent the problem that the hand is scratched since the outer surface of the transparent cover plate 90 is not in flush with the outer surface of the transparent portion 611. In this way, it also helps to reduce the thickness of the electronic device 100, and avoid the problem that the electronic device 100 is too thick since the height of the outer surface of the transparent portion 611 that protrudes from the outer surface of the transparent cover plate 90 in the direction away from the inside of the electronic device 100 is too large. In other examples, the outer surface of the transparent portion 611 may also be recessed in the outer surface of the transparent cover plate 90 in a direction away from the inside of the electronic device 100.

Refer to FIG. 14. FIG. 14 is a schematic exploded diagram of an electronic device 100 according to some other embodiments of this application. FIG. 14 only shows the back cover 21, the flash module 70, the decoration part 60, and the transparent cover plate 90 in the electronic device 100, and other structures are not shown. A difference between the embodiment shown in FIG. 14 and the embodiments shown in FIG. 1 to FIG. 13 lies in that the structure of the first portion 61 is different. Specifically, the first portion 61 includes a third connection plate 614 and a lampshade 615. The third connection plate 614 is annular sheet-like. The third connection plate 614 is connected to an outer peripheral edge of the second portion 62. The lampshade 615 covers an outer surface of the third connection plate 614 and defines the accommodating cavity 64 with the third connection plate 614. For example, the lampshade 615 is provided with a covering space. The end of the covering space facing towards the third connection plate 614 is open. The lampshade 615 covers the outer surface of the third connection plate 614, so that the third connection plate 614 can block the open end of the lampshade 615, thus defining the accommodating cavity 64. An end wall plate of the lampshade 615 away from the third connection plate 614 defines the transparent portion 611. For example, the entire lampshade 615 can transmit light. Of course, it is to be understood that in other examples, only the transparent portion 611 in the lampshade 615 can transmit light, and the rest of the structure of the lampshade 615 cannot transmit light. The wiring opening 641 is formed in the third connection plate 614. In this way, it helps to improve the structural strength of the decoration part 60 through the connection between the lampshade 615 and the third connection plate 614.

In addition, the lampshade 615 and the third connection plate 614 are not an integrally molded part. Usually, in order to transmit light, the material of the transparent portion 611 needs to be a transparent material, the transparent material is generally a material such as plastic or glass, and the structural strength of such material is low. However, in this application, the lampshade 615 and the third connection plate 614 are not an integrally molded part, that is to say, the lampshade 615 and the third connection plate 614 are processed separately and then assembled and connected. In this way, it helps to select different materials to manufacture the lampshade 615 and the third connection plate 614 separately. For example, plastic may be selected to manufacture the lampshade 615, and metals with relatively high structural strength such as aluminum, iron, and copper may be selected to manufacture the third connection plate 614 and the second portion 62. That is to say, the lampshade 615 is a plastic part, and the third connection plate 614 and the second portion 62 are a metal part as a whole, thus helping to improve the structural strength of the decoration part 60.

On this basis, in order to simplify the manufacturing process, reduce the production cost, and simultaneously improve the reliability of the connection between the second portion 62 and the third connection plate 614, the second portion 62 and the third connection plate 614 are an integrally molded part. In some other examples, the third connection plate 614 may also be connected to the second portion 62 by welding, clamping, gluing, or screwing.

On this basis, in some embodiments, multiple wiring openings 641 are provided. The multiple wiring openings 641 correspond to the multiple flash modules 70 one to one. In this way, one flash module 70 corresponds to one wiring opening 641, one wiring avoidance opening 213, and one electrical connection structure 30. Therefore, on the one hand, in the mounting process, after the decoration part 60 and the back cover 21 are mounted in place, the flash module 70 can be mounted in the accommodating cavity 64 sequentially through the corresponding wiring avoidance opening 213 and wiring opening 641. On the other hand, it can also help the end of the electrical connection structure 30 electrically connected to each flash module 70 to pass through the wiring avoidance opening 213 corresponding to the flash module 70 and then be electrically connected to the corresponding flash module 70, thus making the electrical connection structures 30 of the multiple flash modules 70 spaced apart, so as to ensure that the multiple electrical connection structures 30 are independent of each other, facilitate the independent wiring of the electrical connection structure 30 corresponding to each flash module 70, and prevent the problem of short circuiting in a case that the multiple electrical connection structures 30 are connected together.

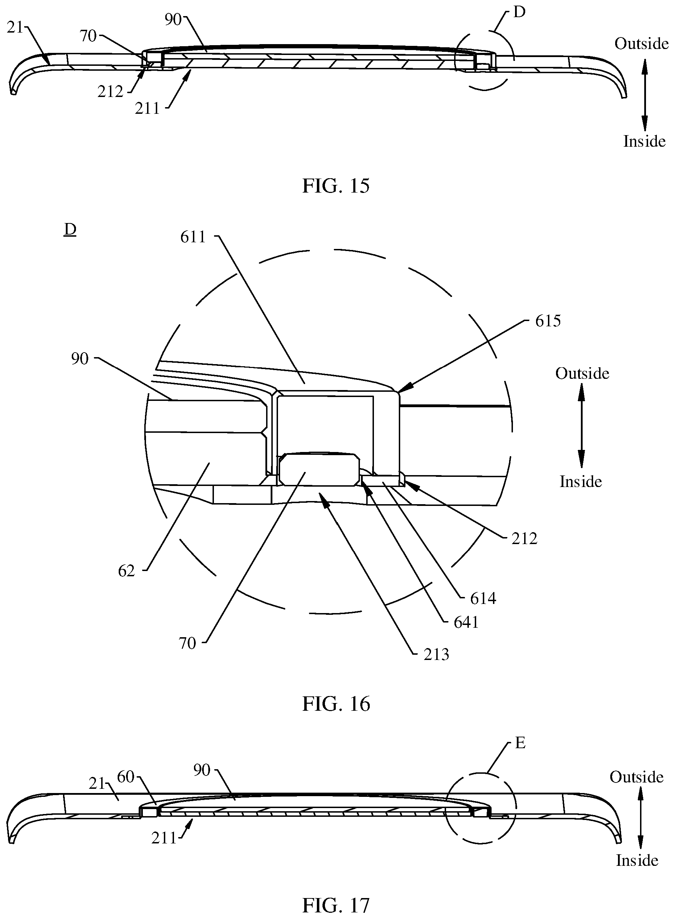

Refer to FIG. 15 and FIG. 16. FIG. 15 is a schematic cross-sectional structural diagram of the electronic device 100 shown in FIG. 14 FIG. 16 is an enlarged diagram of circled position D of the electronic device shown in FIG. 15. Each flash module 70 is fixed onto the third connection plate 614, and a portion of each flash module 70 is accommodated and fixed into the corresponding wiring opening 641. In this way, on the one hand, it can help to reduce the height occupied by the flash module 70 in the accommodating cavity 64, thus helping to reduce the height of the decoration part 60 and reduce the height of the electronic device 100.

Exemplarily, the flash module 70 and the third connection plate 614 may be fixedly connected by gluing.

On this basis, in order to further reduce the thickness of the electronic device 100, the third connection plate 614 is located in the first positioning groove 212.

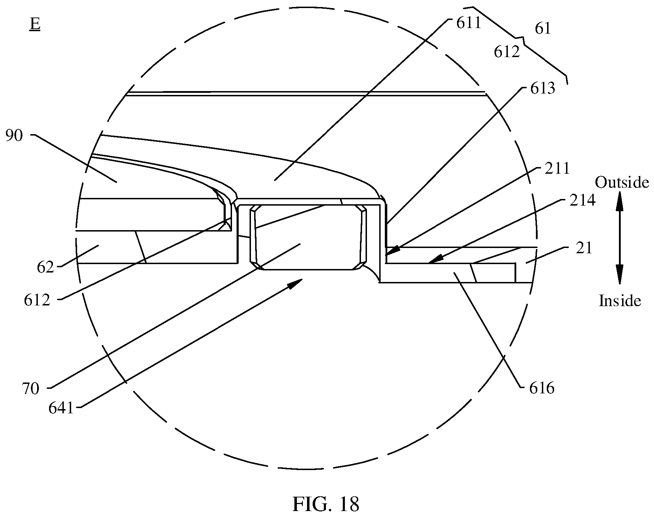

Refer to FIG. 17 and FIG. 18. FIG. 17 is a schematic cross-sectional structural diagram of an electronic device 100 according to still other embodiments of this application. FIG. 18 is an enlarged diagram of circled position E of the electronic device shown in FIG. 17. FIG. 17 and FIG. 18 only show the back cover 21, the flash module 70, the decoration part 60, and the transparent cover plate 90 in the electronic device 100, and other structures are not shown. A difference between the embodiments shown in FIG. 17 and FIG. 18 and the embodiments shown in FIG. 1 to FIG. 13 lies in that the decoration part 60 is no longer located on the side towards which the outer surface of the back cover 21 faces as a whole, but the decoration part 60 is arranged in the mounting opening 211 in a penetrating manner. In this way, it helps to reduce the height of the decoration part 60 protruding from the outer surface of the electronic device 100, thus reducing the overall thickness of the electronic device 100 and helping to achieve the thin design of the electronic device 100. In addition, the wiring opening 641 of the decoration part 60 may be located in the electronic device 100, thus shortening the wiring path, avoiding the arrangement of the wiring avoidance opening 213 in the back cover 21, and helping to improve the structural strength of the back cover 21.

On this basis, in order to achieve the reliability of the connection between the decoration part 60 and the back cover 21, the inner end of the outer peripheral surface of the decoration part 60 is provided with a fixing flange 616. The fixing flange 616 is arranged around the decoration part 60. The fixing flange 616 is annular sheet-like. The fixing flange 616 is fixed onto the inner surface of the back cover 21. In this way, it not only helps to improve the reliability of the connection between the decoration part 60 and the back cover 21, but also helps to seal a gap between the decoration part 60 and the back cover 21 by using the fixing flange 616, thus improving the waterproof and dust-proof effect. Exemplarily, the fixing flange 616 is fixed onto the back cover 21 by gluing. Of course, in other examples, the fixing flange 616 may not be arranged on the decoration part 60, but it is fixed between the outer peripheral surface of the decoration part 60 and the inner peripheral surface of the mounting opening 211.

On this basis, in some embodiments, continuously referring to FIG. 18, in a case that the decoration part 60 includes a first portion 61 and a second portion 62, the first portion 61 surrounds an outer periphery of the second portion 62, the structure of the first portion 61 is the same as that in the embodiments shown in FIG. 1 to FIG. 13, and the fixing flange 616 is arranged at an inner end of an outer peripheral surface of the second connection plate 613. Exemplarily, the fixing flange 616 and the decoration part 60 are an integrally molded part. In this way, it helps to improve the connection strength between the fixing flange 616 and the second connection plate 613.

On this basis, in some other embodiments, in a case that the structure of the first portion 61 of the decoration part 60 is the same as that in the embodiment shown in FIG. 14 to FIG. 16, the fixing flange 616 may be arranged at the inner end of the outer peripheral surface of the lampshade 615, or the fixing flange 616 may be arranged at the inner end of the outer peripheral surface of the third connection plate 614. Exemplarily, in a case that the fixing flange 616 is arranged on the outer peripheral surface of the lampshade 615, the fixing flange 616 and the lampshade 615 may be an integrally molded part. In this way, it helps to improve the connection strength between the fixing flange 616 and the second connection plate 613. Exemplarily, in a case that the fixing flange 616 is arranged on the outer peripheral surface of the third connection plate 614, the fixing flange 616 and the third connection plate 614 may be an integrally molded part. In this way, it helps to improve the connection strength between the fixing flange 616 and the third connection plate 614.

On this basis, in some other embodiments, in a case that the second portion 62 surrounds the outer periphery of the first portion 61, the fixing flange 616 may be arranged on the outer peripheral surface of the second portion 62.

On the basis of any embodiment in which the decoration part 60 is provided with the fixing flange 616, in some embodiments, referring to FIG. 18, the inner surface of the back cover 21 is recessed in a direction towards the outer surface of the back cover 21 to form a second positioning groove 214. The second positioning groove 214 is arranged around the mounting opening 211, and the second positioning groove 214 extends to the mounting opening 211 in a direction towards the mounting opening 211. The fixing flange 616 is fixed into the second positioning groove 214. In this way, on the one hand, the fitting between the second positioning groove 214 and the fixing flange 616 can achieve the positioning and mounting of the decoration part 60 and improve the assembling efficiency; and on the other hand, it also helps to avoid the problem that the fixing flange 616 protrudes from the inner surface of the back cover 21 and occupies the internal space of the back housing 20 due to the absence of the second positioning groove 214, thus helping to optimize the structural layout of the electronic device 100. In addition, for the assembled electronic device 100, the relative position relationship between the camera module 80 and the mounting opening 211 is fixed. In a case that the second positioning groove 214 is not provided, the decoration part 60 will be relatively close to the inside of the electronic device 100. For some camera modules 80 that are relatively high in the Z direction, this may cause interference between the decoration part 60 and the camera module 80, resulting in a situation that the decoration part 60 squeezes the light input end of the camera module 80. By providing the second positioning groove 214 and fixing the fixing flange 616 in the second positioning groove 214, the decoration part 60 can be raised as a whole, thus avoiding some high camera modules 80 to meet the assembling height requirement of the camera modules 80.

Continuously referring to FIG. 18, in some embodiments, in a direction from the inside of the electronic device 100 to the outside of the electronic device 100, the inner surface of the second portion 62 is located on the side of an inner surface of the fixing flange 616 away from the inside of the electronic device 100. In this way, the second portion 62 may be raised as a whole relative to the fixing flange 616, thus avoiding some high camera modules 80 to meet the assembling height requirement of the camera modules 80.

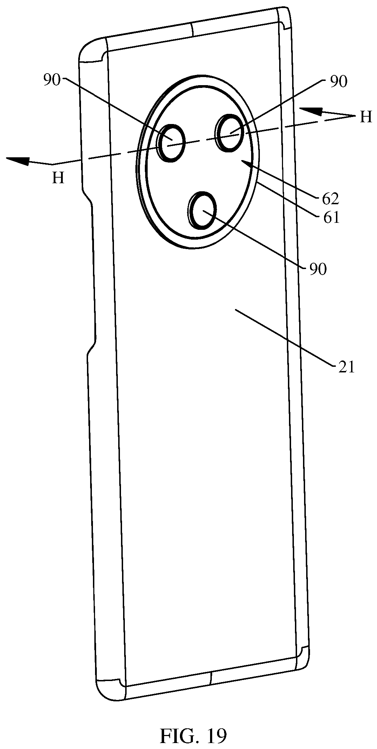

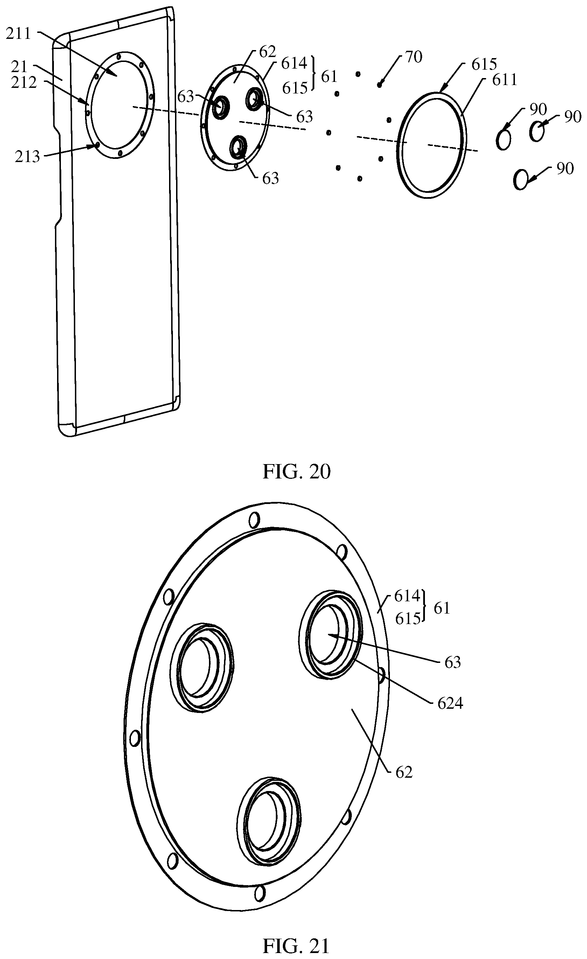

Refer to FIG. 19 and FIG. 20. FIG 19 is a three-dimensional diagram of an electronic device 100 according to some other embodiments of this application. FIG. 20 is a schematic exploded diagram of the electronic device 100 shown in FIG. 19. FIG. 19 and FIG. 20 only show the back cover 21, the flash module 70, the decoration part 60, and the transparent cover plate 90 in the electronic device 100, and other structures are not shown. A difference between the embodiments shown in FIG. 19 and FIG. 20 and the embodiments shown in FIG. 14 to FIG. 16 lies in that the light holes 63 in the second portion 62 are no longer covered by one transparent cover plate 90, and the transparent cover plate 90 is no longer stacked with the outer surface of the second portion 62. Specifically, in the embodiment, multiple transparent cover plates 90 are provided. FIG. 19 and FIG. 20 show three transparent cover plates 90. The multiple transparent cover plates 90 correspond to the multiple light holes 63 one to one. Each transparent cover plate 90 covers an outer end opening of the corresponding light hole 63.

On this basis, in some embodiments, in a case that the end of the first portion 61 provided with the transparent portion 611 protrudes from the outer surface of the second portion 62 in the direction away from the inside of the electronic device 100 to form the accommodating groove 66, since multiple transparent cover plates 90 are provided, when the multiple transparent cover plates 90 are arranged on the second portion 62 and accommodated in the accommodating groove 66, an area in the accommodating groove 66 that is not covered by the transparent cover plates 90 will form a cavity. In actual use by the user, this cavity is prone to accumulating dirt and grime. In order to avoid this problem to a certain extent, please continuously referring to FIG. 19, the outer end surface of the first portion 61 is in flush with the outer end surface of the second portion 62. In this way, on the one hand, it helps to avoid the accumulation of dirt and grime on the decoration part 60 to a certain extent, and improve the user experience; and on the other hand, it can avoid the problem that the thickness of the electronic device 100 increases since the end of the first portion 61 provided with the transparent portion 611 protrudes from the outer surface of the second portion 62 in the direction away from the inside of the electronic device 100.

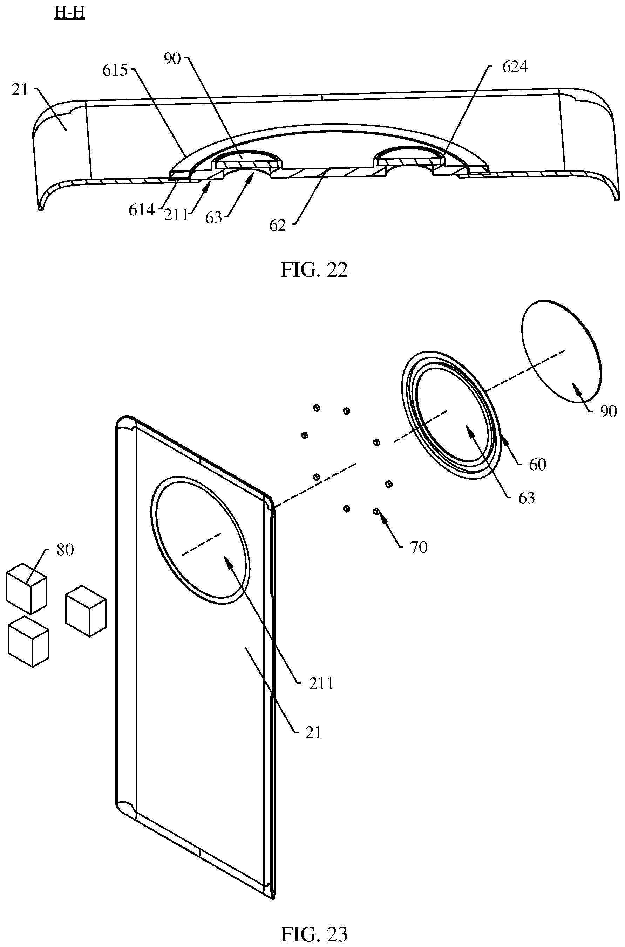

On this basis, in some embodiments, refer to FIG. 21 and FIG. 22. FIG. 21 is a three-dimensional diagram of the decoration part 60 shown in FIG. 19. FIG. 22 is a schematic cross-sectional structural diagram of the electronic device 100 shown in FIG. 19 along line H-H. The outer surface of the second portion 62 is provided with multiple annular flanges 624. The multiple annular flanges 624 correspond to the multiple light holes 63 one to one. Each annular flange 624 is arranged around the corresponding light hole 63. The transparent cover plate 90 corresponding to the light hole 63 is fixed into the corresponding annular flange 624, and an edge of the transparent cover plate 90 is stopped on an inner peripheral surface of the annular flange 624. On the one hand, the arrangement of the annular flange 624 helps to raise the position of the transparent cover plate 90 relative to the back cover 21. For some camera modules 80 with a relatively large height in the Z direction, it helps to prevent interference between the light input end of the camera module 80 and the transparent cover plate 90. On the other hand, it can also play a role of limiting the position of the transparent cover plate 90.

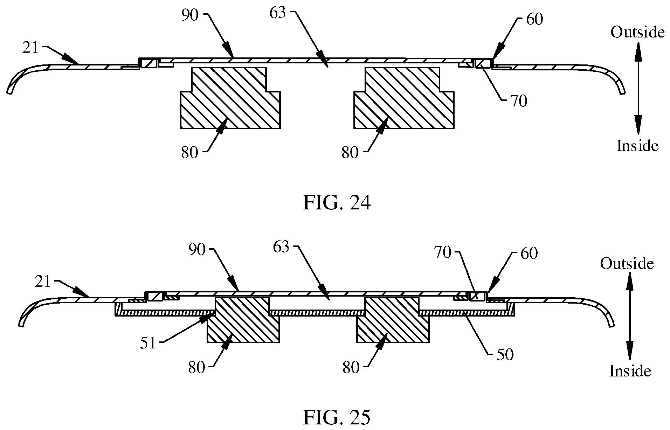

Refer to FIG. 23 and FIG. 24. FIG. 23 is a schematic exploded diagram of an electronic device 100 according to some other embodiments of this application FIG. 24 is a schematic cross-sectional structural diagram of the electronic device 100 shown in FIG. 23. FIG. 23 and FIG. 24 only show the back cover 21, the flash module 70, the camera module 80, the decoration part 60, and the transparent cover plate 90 in the electronic device 100, and other structures are not shown. A difference between the embodiment and the embodiments shown in FIG. 1 to FIG. 22 lies in that one light hole 63 is provided. One light hole 63 corresponds to multiple camera modules 80. The light input end of each camera module 80 is accommodated in the light hole 63. In this way, one relatively large light hole 63 can be used to correspond to all camera modules 80, thus not only achieving the normal photographing of the multiple camera modules 80, but also simplifying the structure of the decoration part 60 and reducing the manufacturing cost of the decoration part 60.

On this basis, in order to further improve the light supplementing effect and light supplementing uniformity of the flash module 70 on the camera module 80, the centerline of the light hole 63 is collinear with the centerline of the transparent portion 611. In this way, the entire structure is more symmetrical, thus making it easier to manufacture and further improving the appearance attractiveness of the electronic device 100.

Since the multiple camera modules 80 corresponding to the same light hole 63, the positioning effect of the light hole 63 on the camera modules 80 is poor, and it may not even be able to position the camera modules 80. On this basis, in order to achieve the positioning of the camera modules 80, referring to FIG. 25, where FIG. 25 is a schematic cross-sectional structural diagram of an electronic device 100 according to still other embodiments of this application, the electronic device 100 further includes a camera fixing bracket 50. The material of the camera fixing bracket 50 includes, but not limited to, metal and plastic. The camera fixing bracket 50 is located on the inner side of the back cover 21 and is fixed relative to the back cover 21. Exemplarily, the camera fixing bracket 50 may be directly connected to the back cover 21 by gluing, welding, screwing, or clamping. In other examples, the camera fixing bracket 50 may also be connected to the main circuit board 40 or the middle plate 23 mentioned above by gluing welding, screwing, or clamping, as long as the camera fixing bracket 50 is fixed relative to the back cover 21.

The camera fixing bracket 50 is provided with multiple positioning holes 51. The multiple positioning holes 51 correspond to the multiple camera modules 80 one to one. Each camera module 80 is arranged in the corresponding positioning hole in a penetrating manner and is in positioning fit with the positioning hole. In this way, it helps to improve the fixing effect of the camera module 80 and prevent the camera module 80 from shaking, thus improving the photographing effect of the camera module 80.

On the basis of any embodiment described above, in some embodiments, the decoration part 60 is exposed out of the surface of the back cover 21, and all surfaces except the outer surface of the transparent portion 611 are provided with a color layer. Exemplarily, the color layer may be formed on the decoration part 60 by screen printing. Exemplarily, in order to ensure the consistency of the external color of the electronic device 100, the color of the color layer may be consistent with the color of the back cover 21.

In the descriptions of this specification, the specific features, structures, materials, or characteristics may be combined in a proper manner in any one or more of the embodiments or examples.

Finally, it is to be understood that the above embodiments are only intended to describe rather than limit the technical solution of this application. Although this application has been described in detail with reference to the embodiments above, those skilled in the art are to understand that modifications may be still made to the technical solution described in each embodiment or equivalent replacements may be made to partial technical features thereof; and however, these modifications or replacements do not cause the essence of the corresponding technical solution to depart from the spirit and scope of the technical solution of each embodiment of this application.

## Claims

1. An electronic device, comprising:
a back cover, wherein the back cover is provided with a mounting opening;
a decoration part, wherein the decoration part is mounted at the mounting opening, the decoration part is provided with a light hole and an accommodating cavity, the light hole is spaced apart from the accommodating cavity, the light hole is opposite to the mounting opening, the decoration part further comprises a transparent portion, and the transparent portion is located at an outer end of the accommodating cavity and defines an outer end wall surface of the accommodating cavity;
a camera module, wherein the camera module is located on an inner side of the back cover, and a light input end of the camera module is located in the light hole; and
a plurality of flash modules, wherein the plurality of flash modules are spaced apart in the accommodating cavity, and each flash module outputs light towards a side where the transparent portion is located.

2. The electronic device according to claim 1, wherein the decoration part comprises a first portion and a second portion,
wherein the first portion is connected to and surrounds the second portion; or, the second portion is connected to and surrounds the first portion; and
the first portion is formed with the accommodating cavity and comprises the transparent portion, the plurality of flash modules are spaced apart in a circumferential direction of the decoration part, and the second portion is provided with the light hole.

3. The electronic device according to claim 2, wherein the accommodating cavity extends annularly along the circumferential direction of the decoration part, and the transparent portion extends annularly along the circumferential direction of the decoration part.

4. The electronic device according to claim 3, wherein the plurality of flash modules are uniformly spaced apart in the circumferential direction of the decoration part.

5. The electronic device according to claim 3 or 4, wherein a plurality of light holes and a plurality of camera modules are respectively provided, the plurality of light holes correspond to the plurality of camera modules one to one, orthographic projections of centerlines of the plurality of light holes in a plane parallel to the second portion are located on the same reference circle, and an orthographic projection of a centerline of the transparent portion in the plane parallel to the second portion is overlapped with a circle center of the reference circle.

6. The electronic device according to any one of claims 3 to 5, wherein a plurality of light holes and a plurality of camera modules are respectively provided, the plurality of light holes correspond to the plurality of camera modules one to one, and the plurality of light holes are uniformly spaced apart in the circumferential direction of the decoration part.

7. The electronic device according to claim 3 or 4, wherein one light hole is provided, and a centerline of the light hole is collinear with a centerline of the transparent portion.

8. The electronic device according to any one of claims 2 to 7, wherein an inner end of the accommodating cavity is provided with a wiring opening communicated with the accommodating cavity,
the electronic device further comprises a plurality of electrical connection structures, the plurality of electrical connection structures correspond to the plurality of flash modules one to one, one end of each electrical connection structure is fixed and electrically connected to the corresponding flash module through the wiring opening, and the other end of each electrical connection structure extends to a side towards which an inner surface of the back cover faces.

9. The electronic device according to claim 8, wherein the first portion surrounds an outer periphery of the second portion, the first portion further comprises a first connection plate and a second connection plate, the first connection plate and the second connection plate are both annularly cylindrical, the first connection plate is connected to an outer peripheral edge of the second portion, the second connection plate surrounds an outer periphery of the first connection plate and is spaced apart from the first connection plate, the transparent portion is connected between an outer end of the first connection plate and an outer end of the second connection plate to define the accommodating cavity with the first connection plate and the second connection plate, and the inner end of the accommodating cavity is open to form the annular wiring opening.

10. The electronic device according to claim 9, wherein the first portion and the second portion are an integrally molded part.

11. The electronic device according to claim 8, wherein the first portion surrounds an outer periphery of the second portion, the first portion comprises a third connection plate and a lampshade, the third connection plate is annular sheet-like and connected to an outer peripheral edge of the second portion, the lampshade covers an outer surface of the third connection plate and defines the accommodating cavity with the third connection plate, the third connection plate is provided with the wiring opening, an end wall plate of the lampshade away from the third connection plate defines the transparent portion, and the lampshade and the third connection plate are not an integrally molded part.

12. The electronic device according to claim 11, wherein a plurality of wiring openings are provided, the plurality of wiring openings are spaced apart in the circumferential direction of the decoration part, one flash module corresponds to one wiring opening, and a portion of each flash module is accommodated and fixed in the corresponding wiring opening.

13. The electronic device according to claim 11 or 12, wherein the third connection plate and the second portion are an integrally molded part.

14. The electronic device according to any one of claims 11 to 13, wherein the lampshade is a plastic part, and the third connection plate and the second portion are a metal part as a whole.

15. The electronic device according to any one of claims 1 to 14, wherein the decoration part is located on a side towards which an outer surface of the back cover faces, and is fixed to a portion of the outer surface of the back cover that surrounds the mounting opening.

16. The electronic device according to claim 15, wherein the decoration part comprises a first portion, the first portion is fixed onto the portion of the outer surface of the back cover that surrounds the mounting opening, the first portion is formed with the accommodating cavity, the inner end of the accommodating cavity is provided with a wiring opening communicated with the accommodating cavity, a portion of the back cover opposite to the wiring opening is provided with a plurality of wiring avoidance openings, and the plurality of wiring avoidance openings are spaced apart in the circumferential direction of the decoration part; and
the electronic device further comprises a plurality of electrical connection structures, one flash module corresponds to one electrical connection structure and one wiring avoidance opening, one end of each electrical connection structure is fixed and electrically connected to the corresponding flash module through the wiring opening, and each electrical connection structure penetrates through the corresponding wiring avoidance opening and extends to the side towards which an inner surface of the back cover faces.

17. The electronic device according to claim 16, wherein the outer surface of the back cover is recessed in a direction towards the inner surface of the back cover to form a first positioning groove, the first positioning groove is arranged around the mounting opening, the first positioning groove extends to the mounting opening in a direction towards the mounting opening, an inner end of the first portion is fixed in the first positioning groove, and the wiring avoidance opening is located at the first positioning groove.

18. The electronic device according to any one of claims 1 to 14, wherein the decoration part is arranged in the mounting opening in a penetrating manner.

19. The electronic device according to claim 18, wherein an inner end of an outer peripheral surface of the decoration part is provided with a fixing flange, the fixing flange is arranged around the decoration part, and the fixing flange is fixed onto the inner surface of the back cover.

20. The electronic device according to claim 19, wherein the inner surface of the back cover is recessed in a direction towards an outer surface of the back cover to form a second positioning groove, the second positioning groove is arranged around the mounting opening, the second positioning groove extends to the mounting opening in a direction towards the mounting opening, and the fixing flange is fixed in the second positioning groove.

21. The electronic device according to claim 19 or 20, wherein the decoration part comprises a first portion and a second portion, the first portion is connected to and arranged around the second portion, the first portion is formed with the accommodating cavity, the second portion is provided with the light hole, the fixing flange is arranged on an outer peripheral surface of the first portion, and in a direction from an inside of the electronic device to an outside of the electronic device, an inner surface of the second portion is located on a side of an inner surface of the fixing flange away from the inside of the electronic device.

22. The electronic device according to any one of claims 1 to 21, further comprising a transparent cover plate, wherein the transparent cover plate is fixed to the decoration part and covers an outer end opening of the light hole, and the transparent cover plate does not cover the transparent portion.

23. The electronic device according to claim 22, wherein the decoration part comprises a first portion and a second portion, one of the first portion and the second portion is connected to and surrounds the other of the first portion and the second portion, the first portion is formed with the accommodating cavity and is provided with the transparent portion, and the second portion is provided with the light hole; and
one transparent cover plate is provided, and the transparent cover plate is stacked and fixed onto an outer surface of the second portion, and covers all light holes in the second portion.

24. The electronic device according to claim 23, wherein an end of the first portion provided with the transparent portion protrudes from the outer surface of the second portion in a direction away from the inside of the electronic device to define an accommodating groove with the second portion, the transparent cover plate is located in the accommodating groove, and an edge of the transparent cover plate is stopped on a side wall surface of the accommodating groove.

25. The electronic device according to claim 22, wherein a plurality of transparent cover plates are provided, a plurality of light holes are provided, the plurality of light holes correspond to the plurality of transparent cover plates one to one, and each transparent cover plate is located at the outer end opening of the corresponding light hole.

26. The electronic device according to claim 25, wherein the decoration part comprises a first portion and a second portion, one of the first portion and the second portion is connected to and surrounds the other of the first portion and the second portion, the first portion is formed with the accommodating cavity and is provided with the transparent portion, the second portion is provided with the light holes, and an outer surface of the first portion is in flush with an outer surface of the second portion.

27. The electronic device according to claim 25, wherein the decoration part comprises a second portion, the second portion is provided with the light holes, an outer surface of the second portion is provided with a plurality of annular flanges, the plurality of annular flanges correspond to the plurality of light holes one to one, each annular flange surrounds the corresponding light hole, and the transparent cover plate corresponding to the light hole is fixed in the corresponding annular flange, and an edge of the transparent cover plate is stopped on an inner peripheral surface of the annular flange.

28. The electronic device according to any one of claims 1 to 27, wherein one light hole corresponds to one camera module, an end of an inner peripheral wall of the light hole adjacent to an internal accommodating space of the electronic device is provided with a positioning groove, the positioning groove annularly extends along an entire circumferential direction of the light hole, the positioning groove extends to the inner surface of the back cover in a direction close to the internal accommodating space of the electronic device, and an outer peripheral edge of the light input end of the camera module corresponding to the light hole is in positioning fit with the positioning groove.

29. The electronic device according to any one of claims 1 to 27, wherein one light hole is provided, a plurality of camera modules are provided, and the light input ends of the plurality of camera modules are located in the one light hole.

30. The electronic device according to claim 29, further comprising a camera fixing bracket, wherein the camera fixing bracket is located on the inner side of the back cover and is fixed relative to the back cover, the camera fixing bracket is provided with a plurality of positioning holes, the plurality of positioning holes correspond to the plurality of camera modules one to one, and each camera module is arranged in the positioning hole in a penetrating manner and is in positioning fit with the positioning hole.
